# EUROPÄISCHE PATENTSCHRIFT

(11) **EP 4 210 924 B1**
(45) Veröffentlichungstag und Bekanntmachung des Hinweises auf die Patenterteilung: **02.12.2026**
(21) Anmeldenummer: 21773556.2
(22) Anmeldetag: 07.09.2021
(51) Int. Cl.: B29C 44/44, B29C 44/58, B29C 44/60, B29C 33/30

(54) **ANLAGE ZUR HERSTELLUNG WENIGSTENS EINES PARTIKELSCHAUMFORMTEILS**
SYSTEM FOR PRODUCING AT LEAST ONE PARTICLE FOAM MOULDING
INSTALLATION POUR LA FABRICATION D'AU MOINS UNE PIÈCE MOULÉE EN MOUSSE PARTICULAIRE

(30) Priorität: 08.09.2020 DE 102020123440
(43) Veröffentlichungstag der Anmeldung: 19.07.2023
(73) Patentinhaber: Siegfried Hofmann GmbH, 96215 Lichtenfels (DE)
(72) Erfinder: SCHÜTZ, Johannes, 96052 Bamberg (DE); FISCHER, Patrick, 96237 Ebersdorf (DE); MAHR, Stefan, 96272 Hochstadt (DE); KÖRBER, Peter, 95326 Kulmbach (DE); FAULHABER, Kai, 96231 Bad Staffelstein (DE); PACHADJIOSKI, Edin, 96215 Lichtenfels (DE)
(74) Vertreter: Hafner & Kohl PartmbB
(86) Internationale Anmeldenummer: PCT/EP2021/074595
(87) Internationale Veröffentlichungsnummer: WO 2022/053460

(56) Entgegenhaltungen:
- WO-A1-2016/054675
- WO-A2-2018/100154
- CN-A- 108 943 554
- DE-A1- 3 316 926

## Beschreibung

Die Erfindung betrifft eine Anlage zur Herstellung wenigstens eines Partikelschaumformteils aus einem expandierbaren oder expandiertem Partikelschaummaterial.

Entsprechende Anlagen sind aus dem Bereich der Verarbeitung von expandierbaren oder expandierten Partikelschaummaterialien zur Herstellung von Partikelschaumformteilen aus dem Stand der Technik dem Grunde nach bekannt.

Die Druckschrift WO2018/100154 A2 offenbart eine Anlag gemäß dem Oberbegriff des Anspruchs 1 und ein Verfahren gemäß dem Oberbegriff des Anspruchs 13.

Typische Bestandteile entsprechender Anlagen sind Formteilautomaten, welche wenigstens eine Formwerkzeugeinrichtung zur Verarbeitung von expandierbarem oder expandiertem Partikelschaummaterial zur Herstellung eines Partikelschaumbauteils umfassen.

Entsprechenden Formteilautomaten sind typischerweise Funktionsmodule, wie z. B. Dampferzeuger, zugeordnet, welchen im Zusammenhang mit der durch die jeweiligen Formteilautomaten ausführbaren Verarbeitung von expandierbaren oder expandiertem Partikelschaummaterialien bestimmte Funktionen zukommen.

Die Konfiguration entsprechender Anlagen, d. h. insbesondere auch die funktionelle Kopplung zwischen jeweiligen Formteilautomaten und/oder jeweiligen Funktionsmodulen, ist bis dato typischerweise nicht im Hinblick auf ein optimiertes Management von Ressourcen, wie z. B. zur Verarbeitung von expandierbaren oder expandiertem Partikelschaummaterial erforderlichen Energieträgern, Prozessfluiden, etc., ausgelegt, sodass im Betrieb entsprechender Anlagen Situationen auftreten können, in welchen, etwa durch einen gleichzeitigen Abruf von Ressourcen durch mehrere Formteilautomaten, hohe Spitzenlasten auftreten können.

Dies stellt einen im Hinblick auf eine effiziente Nutzung von Ressourcen in einer entsprechenden Anlage verbesserungswürdigen Zustand dar.

Der Erfindung liegt hiervon ausgehend die Aufgabe zugrunde, eine demgegenüber, insbesondere im Hinblick auf die Möglichkeit einer effizienten Nutzung von Ressourcen, verbesserte Anlage zur Herstellung wenigstens eines Partikelschaumformteils anzugeben.

Die Aufgabe wird durch eine Anlage zur Herstellung wenigstens eines Partikelschaumformteils aus einem expandierbaren oder expandierten Partikelschaummaterial gemäß Anspruch 1 gelöst. Die hierzu abhängigen Ansprüche betreffen mögliche Ausführungsformen der Anlage.

Ein erster Aspekt der Erfindung betrifft eine Anlage zur Herstellung wenigstens eines Partikelschaumformteils aus einem expandierbaren oder expandierten Partikelschaummaterial. Die Anlage ist sonach zur Verarbeitung von expandierbarem oder expandiertem Partikelschaummaterial zur Herstellung von Partikelschaumformteilen eingerichtet und umfasst - wie sich im Weiteren ergibt - hierzu Vorrichtungen zur jeweiligen Durchführung einer oder mehrerer Arbeitsprozesse zur Verarbeitung von Kunststoffpartikeln aus wenigstens einem Partikelschaummaterial, wie z. B. expandierbarem oder expandierten Polystyrol, expandierbaren oder expandierten Polyolefinen, etc., zur Herstellung eines Partikelschaumformteils.

Der Begriff "Arbeitsprozess" beinhaltet grundsätzlich jedweden vermittels der Anlage durchführbaren Prozess, welcher direkt oder indirekt mit der Verarbeitung von Kunststoffpartikeln aus wenigstens einem expandierbaren oder expandierten Partikelschaummaterial zur Herstellung eines Partikelschaumformteils in einem Zusammenhang steht. Ein Arbeitsprozess kann sonach z. B. ein Verarbeitungsprozess sein, in welchem die (eigentliche) Verarbeitung entsprechender Kunststoffpartikel, d. h. insbesondere ein Verbinden entsprechender Kunststoffpartikel unter Ausbildung eines herzustellenden Partikelschaumformteils, erfolgt. Alternativ oder ergänzend kann ein Arbeitsprozess ein Bereitstellungsprozess sein, in welchem z. B. eine Menge an entsprechenden Kunststoffpartikeln, insbesondere eine in einem Verarbeitungsprozess zu verarbeitende Menge an entsprechenden Kunststoffpartikeln, und/oder eine Menge eines Prozessfluids, insbesondere einen in einem Verarbeitungsprozess zu verarbeitende Menge eines Prozessfluids, bereitgestellt wird. Alternativ oder ergänzend kann ein Arbeitsprozess z. B. ein Förderprozess sein, in welchem z. B. eine Menge an entsprechenden Kunststoffpartikeln, insbesondere eine in einem Verarbeitungsprozess zu verarbeitende Menge an entsprechenden Kunststoffpartikeln, und/oder eine Menge eines Prozessfluids, insbesondere eine in einem Verarbeitungsprozess zu verarbeitende Menge eines Prozessfluids, entlang einer Förderstrecke befördert wird. Alternativ oder ergänzend kann ein Arbeitsprozess z. B. ein Füllprozess sein, in welchem z. B. eine Menge an entsprechenden Kunststoffpartikeln, insbesondere eine in einem Verarbeitungsprozess zu verarbeitende Menge an entsprechenden Kunststoffpartikeln, in eine Formwerkzeugkavität einer Formwerkzeugeinrichtung eines Formteilautomaten eingefüllt wird. Alternativ oder ergänzend kann ein Arbeitsprozess z. B. ein Aufbereitungsprozess sein, in welchem z. B. ein, insbesondere in einem Verarbeitungsprozess verwendetes, Prozessfluid, wie z. B. Dampf, Druckluft, Wasser, etc., aufbereitet wird.

Die Anlage umfasst wenigstens einen ersten Formteilautomaten sowie wenigstens einen weiteren Formteilautomat und/oder wenigstens einen dem wenigstens einen ersten Formteilautomat und/oder dem wenigstens einen weiteren Formteilautomaten zuordenbares oder zugeordnetes Funktionsmodul.

Der wenigstens eine erste Formteilautomat ist zur Durchführung einer oder mehrerer Verarbeitungsprozesse zur Verarbeitung von Kunststoffpartikeln aus wenigstens einem Partikelschaummaterial zur Herstellung eines Partikelschaumformteils eingerichtet. Der wenigstens eine erste Formteilautomat kann daher auch als Vorrichtung zur Verarbeitung von Kunststoffpartikeln aus wenigstens einem expandierbaren oder expandierten Partikelschaummaterial bezeichnet bzw. erachtet werden. Der wenigstens eine erste Formteilautomat umfasst typischerweise wenigstens eine Formwerkzeugeinrichtung zur, gegebenenfalls dampfbasierten, Verarbeitung von Kunststoffpartikeln aus wenigstens einem expandierbaren oder expandierten Partikelschaummaterial zur Herstellung eines Partikelschaumformteils. Die wenigstens eine Formwerkzeugeinrichtung umfasst typischerweise wenigstens eine durch ein oder mehrere Formwerkzeugelemente definierbare oder definierte Formwerkzeugkavität, innerhalb welcher Kunststoffpartikel aus wenigstens einem expandierbaren oder expandierten Partikelschaummaterial unter Ausbildung entsprechender Partikelschaumformteile verarbeitet werden können. Der wenigstens eine Formteilautomat kann eine, z. B. gehäuse-, gestell- oder rahmenartige, Struktur umfassen, an oder in welcher wenigstens die wenigstens eine Formwerkzeugeinrichtung angeordnet oder ausgebildet ist.

Der wenigstens eine weitere Formteilautomat (sofern vorhanden) ist ebenso zur Durchführung einer oder mehrerer Verarbeitungsprozesse zur, gegebenenfalls dampfbasierten, Verarbeitung von Kunststoffpartikeln aus wenigstens einem Partikelschaummaterial zur Herstellung eines Partikelschaumformteils eingerichtet. Der wenigstens eine weitere Formteilautomat ist typischerweise analog dem wenigstens einen ersten Formteilautomaten konfiguriert, sodass die vorstehenden Erläuterungen im Zusammenhang mit dem wenigstens einen ersten Formteilautomaten analog für den wenigstens einen weiteren Formteilautomaten gelten.

Der wenigstens eine erste Formteilautomat - Analoges gilt für den wenigstens einen weiteren Formteilautomaten - kann wenigstens eine Schnittstelle zur, insbesondere funktionellen und/oder konstruktiven, Ankopplung wenigstens eines dem wenigstens einen ersten Formteilautomaten funktionell zuordenbaren oder zugeordneten Funktionsmoduls aufweisen. Bei der wenigstens einen Schnittstelle kann es sich entsprechend um eine funktionelle und/oder um eine konstruktive Schnittstelle handeln. Eine entsprechende Schnittstelle kann sonach eingerichtet sein, eine funktionelle und/oder konstruktive Kopplung des wenigstens einen ersten Formteilautomaten mit wenigstens einem dem wenigstens einen ersten Formteilautomaten funktionell zuordenbaren oder zugeordneten Funktionsmodul, insbesondere unter Ausbildung einer individuell konfigurierbaren bzw. konfigurierten Formteilautomat-Funktionsmodul-Anordnung, herzustellen. Jeweilige formteilautomatseitige Schnittstellen sind insbesondere eingerichtet, mit jeweiligen funktionsmodulseitigen Schnittstellen zusammenzuwirken. Die wenigstens eine formteilautomatseitige Schnittstelle ermöglicht dabei insbesondere ein wahlweises direktes Ankoppeln wenigstens eines Funktionsmoduls; insbesondere derart, dass eine formteilautomatseitige Struktur bzw. Gehäusestruktur direkt an eine Struktur bzw. Gehäusestruktur des jeweiligen Funktionsmoduls ankoppelbar oder angekoppelt ist. Analoges gilt wiederum für den wenigstens einen weiteren Formteilautomaten (soweit vorhanden).

Die Anlage kann, wie erwähnt, zudem wenigstens ein dem wenigstens einen ersten Formteilautomaten und/oder dem wenigstens einen weiteren Formteilautomaten zuordenbares oder zugeordnetes Funktionsmodul umfassen. Das wenigstens eine Funktionsmodul ist zur Durchführung einer oder mehrerer Arbeitsprozesse zur Verarbeitung von Kunststoffpartikeln aus wenigstens einem Partikelschaummaterial zur Herstellung eines Partikelschaumformteils eingerichtet. Das wenigstens eine Funktionsmodul umfasst je nach seiner konkreten Funktionalität wenigstens eine Funktionseinheit, welche zur Durchführung eines oder mehrerer Arbeitsprozesse zur Verarbeitung von Kunststoffpartikeln aus wenigstens einem Partikelschaummaterial zur Herstellung eines Partikelschaumformteils eingerichtet ist. Bei einem entsprechenden Arbeitsprozess kann es sich z. B. um einen entsprechenden Bereitstellungsprozess, um einen entsprechenden Förderprozess, um einen entsprechenden Füllprozess, oder um einen entsprechenden Aufbereitungsprozess handeln. Das wenigstens eine Funktionsmodul kann eine, z. B. gehäuse-, gestell- oder rahmenartige, Struktur umfassen, an oder in welcher die wenigstens eine Funktionseinheit angeordnet oder ausgebildet ist.

Das wenigstens eine oder wenigstens ein Funktionsmodul kann als eine Bereitstellungseinrichtung zur Bereitstellung wenigstens einer Ressource, wie z. B. eines Prozessfluids oder Energieträgers, für den wenigstens einen ersten Formteilautomaten und/oder für den wenigstens einen weiteren Formteilautomaten und/oder für wenigstens ein weiteres Funktionsmodul ausgebildet sein oder eine solche umfassen. Der Begriff "Bereitstellung" kann dabei eine Erzeugung oder Speicherung einer Ressource beinhalten. Bei einer Ressource in Form eines Energieträgers kann es sich insbesondere um einen elektrischen Energieträger, wie z. B. Strom oder Spannung, und/oder um einen pneumatischen Energieträger, wie z. B. Druck, und/oder um einen thermischen Energieträger, wie z. B. Wärme, handeln. Bei einer Ressource in Form eines Prozessfluids kann es sich z. B. um Dampf, Druckluft und/oder Wasser handeln.

Eine konkrete Ausführungsform eines entsprechenden Funktionsmoduls kann z. B. eine Bereitstellungseinrichtung zur Bereitstellung eines Prozessfluids, wie z. B. Kühlwasser, zur Temperierung wenigstens eines Formteilautomaten sein. Eine weitere konkrete Ausführungsform eines entsprechenden Funktionsmoduls kann z. B. eine Bereitstellungseinrichtung zur Bereitstellung eines Prozessfluids, wie z. B. Dampf, zur Verbindung von in der Formwerkzeugkavität des wenigstens einen Formteilautomaten befindlichen Kunststoffpartikeln aus wenigstens einem expandierbaren oder expandierten Partikelschaummaterials und damit einhergehend unter Ausbildung eines jeweiligen Partikelschaumformteils sein. Eine weitere konkrete Ausführungsform eines entsprechenden Funktionsmoduls kann z. B. eine Bereitstellungseinrichtung zur Bereitstellung eines druckbeaufschlagten Gases, wie z. B. Druckluft, z. B. zur Trocknung der wenigstens einen Formwerkzeugkavität eines Formteilautomaten sein.

Ein weitere konkrete Ausführungsform eines entsprechenden Funktionsmoduls kann z. B. eine Speichereinrichtung zur zeitweisen Speicherung einer Ressource, wie z. B. eines Prozessfluids oder eines Energieträgers, sein. Eine konkrete Ausführungsform eines entsprechenden Funktionsmoduls kann z. B. eine Speichereinrichtung zur zeitweisen Speicherung einer Ressource, wie z. B. ein Dampfspeicher, ein Druckluftspeicher, ein Wasserspeicher als Beispiele für Speichereinrichtungen zur Speicherung eines Prozessfluids oder ein Stromspeicher, ein Druckspeicher, ein Wärmespeicher als Beispiele für Speichereinrichtungen zur Speicherung eines Energieträgers sein.

Alternativ oder ergänzend kann das wenigstens eine Funktionsmodul oder wenigstens ein Funktionsmodul als eine Bereitstellungseinrichtung zur Bereitstellung eines über wenigstens einen Formteilautomaten verarbeitbaren oder zu verarbeitbaren expandierbaren oder expandierten Partikelschaummaterials bzw. entsprechenden Kunststoffpartikeln ausgebildet sein oder eine solche umfassen. Eine konkrete Ausführungsform eines entsprechenden Funktionsmoduls kann z. B. eine Fördereinrichtung zur Förderung eines über wenigstens einen Formteilautomaten verarbeitbaren oder zu verarbeitbaren expandierbaren oder expandierten Partikelschaummaterials bzw. entsprechender Kunststoffpartikel in wenigstens eine Formwerkzeugkavität wenigstens eines Formteilautomaten sein.

Alternativ oder ergänzend kann das wenigstens eine Funktionsmodul oder wenigstens ein Funktionsmodul als eine Aufbereitungseinrichtung zur Aufbereitung eines Prozessfluids wenigstens eines Formteilautomaten und/oder wenigstens eines anderen Funktionsmoduls ausgebildet sein oder eine solche umfassen. Der Begriff "Aufbereitung" kann die Veränderung wenigstens einen chemischen und/oder physikalischen Parameters des jeweiligen Prozessfluids beinhalten.

Das wenigstens eine Funktionsmodul kann wenigstens eine Schnittstelle zur, insbesondere funktionellen und/oder konstruktiven, Ankopplung an den wenigstens einen ersten Formteilautomaten und/oder den wenigstens einen weiteren Formteilautomaten aufweisen. Bei der wenigstens einen Schnittstelle kann es sich entsprechend um eine funktionelle und/oder konstruktive Schnittstelle handeln. Eine entsprechende Schnittstelle kann sonach eingerichtet sein, eine funktionelle und/oder konstruktive Kopplung des wenigstens einen Funktionsmoduls mit wenigstens einem Formteilautomaten, insbesondere unter Ausbildung einer individuell konfigurierten Formteilautomat-Funktionsmodul-Anordnung, herzustellen. Jeweilige funktionsmodulseitige Schnittstellen sind insbesondere eingerichtet, mit jeweiligen formteilautomatseitigen Schnittstellen zusammenzuwirken. Die wenigstens eine funktionsmodulseitige Schnittstelle ermöglicht dabei insbesondere ein direktes Ankoppeln wenigstens eines Formteilautomaten; insbesondere derart, dass eine funktionsmodulseitige Struktur bzw. Gehäusestruktur direkt an eine Struktur bzw. Gehäusestruktur des jeweiligen Formteilautomaten ankoppelbar oder angekoppelt ist.

Selbstverständlich ist es denkbar, dass über entsprechende formteilautomatseitige Schnittstellen auch mehrere Formteilautomaten miteinander gekoppelt sein bzw. werden. Gleichermaßen ist es denkbar, dass über entsprechende funktionsmodulseitige Schnittstellen mehrere Funktionsmodule miteinander gekoppelt sein bzw. werden können. Ebenso ist es denkbar, dass mehrere miteinander gekoppelte Formteilautomaten mit mehreren miteinander gekoppelten Funktionsmodulen gekoppelt sind.

Grundsätzlich kann die Anlage sonach mehrere Formteilautomaten gleicher oder unterschiedlicher Konfiguration und/oder mehrere Funktionsmodule gleicher oder unterschiedlicher Konfiguration, d. h. insbesondere gleicher oder unterschiedlicher Funktionalität, aufweisen. Dabei können jeweilige Formteilautomaten und/oder jeweilige Funktionsmodule z. B. in paralleler und/oder serieller Anordnung angeordnet sein.

Im Rahmen des Betriebs der Anlage werden typischerweise Ressourcen verbraucht. Eine entsprechende Ressource kann z. B. ein Prozessfluid, insbesondere Dampf und/oder Druckluft und/oder Wasser, und/oder ein zum Betrieb des ersten Formteilautomaten und/oder des wenigstens einen weiteren Formteilautomaten und/oder des wenigstens einen Funktionsmoduls erforderlicher Energieträger, insbesondere ein elektrischer, pneumatischer und/oder thermischer Energieträger, sein.

Die Anlage umfasst weiterhin wenigstens eine hardware- und/oder softwaremäßig implementierte Erfassungseinrichtung. Die Erfassungseinrichtung ist zur Erfassung einer den aktuellen und/oder künftigen Verbrauch wenigstens einer Ressource, d. h. insbesondere eines Prozessfluids oder eines Energieträgers, in einem aktuellen und/oder künftigen Betrieb des ersten Formteilautomaten und/oder des wenigstens einen weiteren Formteilautomaten und/oder des wenigstens einen Funktionsmoduls beschreibenden Ressourceninformation eingerichtet. Über die Erfassungseinrichtung lässt sich sonach in Form einer entsprechenden Ressourceninformation eine Angabe bzw. Kenntnis über den aktuellen bzw. künftigen Verbrauch einer oder mehrerer im Rahmen des Betriebs der Anlage oder eines Bestandteils der Anlage, d. h. des wenigstens einen ersten Formteilautomaten und/oder des wenigstens einen weiteren Formteilautomaten und/oder des wenigstens einen Funktionsmoduls, verbrauchter Ressourcen erzeugen.

Die Erfassungseinrichtung kann sonach ein oder mehrere innerhalb der Anlage verteilt angeordnete oder ausgebildete Erfassungselemente, d. h. z. B. Sensorelemente, Verbrauchszählerelemente, etc., umfassen, deren Erfassungsinformationen sich von der Erfassungseinrichtung, d. h. insbesondere entsprechenden Verarbeitungsalgorithmen der Erfassungseinrichtung, zu einer entsprechenden Ressourceninformation verarbeiten lassen. Beispielsweise können den Bestandteilen der Anlage jeweils wenigstens ein entsprechendes Erfassungselement zugeordnet sein, über welche sich eine den aktuellen und/oder künftigen Verbrauch einer oder mehrerer für den Betrieb des jeweiligen Bestandteils erforderlicher Ressource(n) bzw. einer oder mehrerer im Rahmen des Betriebs des jeweiligen Bestandteils verbrauchter Ressource(n) beschreibende Erfassungsinformationen (Verbrauchserfassungsinformationen) erzeugen lässt, auf Grundlage welcher die Erfassungseinrichtung die Ressourceninformation erzeugt.

Zur Erzeugung entsprechender Ressourceninformation kann die Erfassungseinrichtung dabei grundsätzlich jede Information - diese kann, wie erwähnt, z. B. von dem wenigstens einen Formteilautomaten und/oder dem wenigstens einen weiteren Formteilautomaten und/oder dem wenigstens einen Funktionsmodul zuordenbaren oder zugeordneten Erfassungselement geliefert werden - verarbeiten, über welche sich der Verbrauch einer oder mehrerer Ressourcen in einem aktuellen und/oder künftigen Betrieb der Anlage beschreiben lässt. Grundsätzlich können hierbei sonach z. B. aktuelle Verbrauchswerte einer, mehrerer oder aller im Rahmen des Betriebs der Anlage verbrauchter Ressourcen und/oder, z. B. aus einer Betriebsplanung der Anlage, gewonnene künftige Verbrauchswerte einer, mehrerer oder aller im Rahmen des Betriebs der Anlage verbrauchter Ressourcen berücksichtigt und entsprechend zu einer Ressourceninformation verarbeitet werden.

Die Erfassungseinrichtung kann eingerichtet sein, spezifische Ressourceninformationen für bestimmte Ressourcen, d. h. Ressourceninformationen, welche den aktuellen und/oder künftigen Verbrauch einer oder mehrerer bestimmter Ressourcen beschreiben, zu erzeugen. Spezifische Ressourceninformation können z. B. für bestimmte Prozessfluide und/oder bestimmte Energieträger erzeugt werden. Ein konkretes Beispiel ist sonach eine Ressourceninformation, welche den aktuellen und/oder künftigen Verbrauch von Dampf oder Druckluft oder Wasser als jeweilige Beispiele für spezifische Prozessfluide beschreibt. Ein weiteres konkretes Beispiel ist eine Ressourceninformation, welche den aktuellen und/oder künftigen Verbrauch von elektrischer, pneumatischer oder thermischer Energie als jeweilige Beispiele für spezifische Energieträger beschreibt.

Alternativ kann die Erfassungseinrichtung eingerichtet sein, spezifische Ressourceninformationen für bestimmte Bestandteile der Anlage, d. h. Ressourceninformationen, welche den aktuellen und/oder künftigen Verbrauch einer oder mehrerer bestimmter Bestandteile der Anlage beschreiben, zu erzeugen. Spezifische Ressourceninformation können z. B. für bestimmte Formteilautomaten und/oder bestimmte Funktionsmodule erzeugt werden. Ein konkretes Beispiel ist sonach eine Ressourceninformation, welche den aktuellen und/oder künftigen Verbrauch einer Ressource für wenigstens einen spezifischen Formteilautomaten oder eine Gruppe spezifischer Formteilautomaten, insbesondere eine Gruppe gleich oder ähnlich konfigurierter Formteilautomaten, beschreibt. Ein weiteres konkretes Beispiel ist eine Ressourceninformation, welche den aktuellen und/oder künftigen Verbrauch einer Ressource für wenigstens ein spezifisches Funktionsmodul oder eine Gruppe spezifischer Funktionsmodule, insbesondere eine Gruppe gleich oder ähnlich konfigurierter Funktionsmodule, beschreibt.

Selbstverständlich kann eine Ressourceninformation auch sowohl spezifische Ressourceninformationen für bestimmte Ressourcen als auch spezifische Ressourceninformationen für bestimmte Bestandteile der Anlage beschreiben. Mithin lassen sich über entsprechende Ressourceninformationen sehr detaillierte Auskünfte über den aktuellen und/oder künftigen Ressourcenverbrauch bzw. Ressourcenbedarf innerhalb der Anlage beschreiben.

Grundsätzlich gilt, dass der Begriff "Ressourcenverbrauch" auch einen Ressourcenbedarf beinhalten kann respektive unter dem Begriff "Ressourcenverbrauch" auch der Begriff "Ressourcenbedarf" verstanden werden kann.

Über entsprechende Ressourceninformationen können sonach, gegebenenfalls örtlich und/oder zeitlich aufgelöst, qualitativ oder quantitativ Kenntnisse über den aktuellen und/oder künftigen Verbrauch einer oder mehrerer für den Betrieb der Anlage erforderlicher Ressourcen respektive im Rahmen des Betriebs der Anlage verbrauchter Ressourcen erhalten werden, welche, wie sich im Weiteren ergibt, der Steuerung des Betriebs der Anlage, etwa im Hinblick auf eine möglichst effiziente Nutzung entsprechender Ressourcen zugrunde gelegt werden können.

Mithin können über entsprechende Ressourceninformationen präventiv bestimmte Ressourcenverbräuche der Anlage bzw. einzelner Funktionsmodule der Anlage bestimmt reden, was eine effiziente Steuerung der Anlage z. B. im Hinblick auf die erwähnte Nutzung entsprechender Ressourcen, jedoch beispielsweise auch im Hinblick auf die Verringerung von Totzeiten bestimmter Funktionsmodule ermöglicht.

Beispielsweise kann ein für den Betrieb wenigstens eines ersten Formteilautomaten und/oder wenigstens eines ersten Funktionsmoduls erforderlicher aktueller oder künftiger Ressourcenverbrauch innerhalb der Anlage an wenigstens einen weiteren Formteilautomaten und/oder an wenigstens ein weiteres Funktionsmodul übermittelt werden, sodass die für den Betrieb des wenigstens einen ersten Formteilautomaten und/oder des wenigstens einen ersten Funktionsmoduls erforderliche Ressource rechtzeitig über den wenigstens einen weiteren Formteilautomaten und/oder über das wenigstens eine weitere Funktionsmodul bereitgestellt werden kann.

Mit anderen Worten können über entsprechende Ressourceninformationen präventiv Informationen zu einem Mehr- oder Minderbedarf wenigstens einer bestimmten Ressource innerhalb der Anlage ermittelt und der Steuerung der Anlage respektive einzelner, mehrerer oder sämtlicher Bestandteile der Anlage zugrunde gelegt werden.

Die Erzeugung entsprechender Ressourceninformationen kann kontinuierlich, quasikontinuierlich oder diskontinuierlich erfolgen. Die Erfassungseinrichtung kann sonach eingerichtet sein, entsprechende Ressourceninformationen kontinuierlich, quasikontinuierlich oder diskontinuierlich zu erzeugen.

Weiterhin umfasst die Anlage wenigstens eine hardware- und/oder softwaremäßig implementierte Steuerungseinrichtung. Die Steuerungseinrichtung - bei welcher es sich um einen zentralen Leitstand der Anlage handeln kann - ist zur Steuerung des Betriebs der Anlage, d. h. insbesondere des ersten Formteilautomaten und/oder des wenigstens einen weiteren Formteilautomaten (sofern vorhanden) und/oder des wenigstens einen Funktionsmoduls, auf Grundlage einer entsprechenden Ressourceninformation eingerichtet. Über die Steuerung des Betriebs der Anlage lässt sich auch der Verbrauch einer, mehrerer oder aller in einem aktuellen und/oder künftigen Betrieb der Anlage verbrauchter Ressourcen beeinflussen. Derart kann ein, z. B. im Hinblick auf ein weiter unten näher erläutertes Zielkriterium, wie z. B. den Ressourcenverbrauch, optimierter Betrieb der Anlage realisiert werden.

Die mit den Bestandteilen der Anlage über Datenverbindungen kommunizierende Steuerungseinrichtung kann dabei im Sinne eines Hubs aktuelle Verbrauchswerte, etc. einzelner, mehrerer oder sämtlicher Bestandteile der Anlage als Grundlage für eine optimierte Steuerung des Betriebs der Anlage verwenden. Eine entsprechende Steuerung des Betriebs der Anlage kann sich selbstverständlich auch positiv auf die Qualität der vermittels der Anlage herstellbaren bzw. hergestellten Partikelschaumformteile bzw. deren Reproduzierbarkeit auswirken.

Durch das Zusammenwirken der Erfassungseinrichtung und der Steuerungseinrichtung und somit durch die Möglichkeit, der gezielten Steuerung des Betriebs der Anlage entsprechende Ressourceninformation zugrunde zu legen, d. h. insbesondere den Betrieb der Anlage oder bestimmter Bestandteile der Anlage in Abhängigkeit entsprechender Ressourceninformation zu steuern, ist eine Möglichkeit gegeben, den Betrieb der Anlage im Hinblick auf eine effiziente Nutzung von Ressourcen zu steuern. Dies beinhaltet auch die Möglichkeit, Abrufe von Ressourcen, Partikelschaummaterialien, etc. im Hinblick auf eine aktuelle und/oder künftige Betriebssituation der Anlage bzw. einzelner, mehrerer oder sämtlicher Bestandteile der Anlage zu steuern und gegebenenfalls auch zu optimieren, und/oder Funktionsausfälle oder -einschränkungen bestimmter Bestandteile der Anlage zu kompensieren.

Insgesamt liegt damit eine verbesserte Anlage zur Herstellung wenigstens eines Partikelschaumformteils vor.

Die Erfassungseinrichtung kann auch eingerichtet sein kann, alternativ oder ergänzend zu entsprechenden Ressourceninformation aktuelle und/oder künftige Betriebsinformationen einzelner, mehrerer oder sämtlicher Bestandteile der Anlage zu erfassen und eine den aktuellen und/oder künftigen Betrieb einzelner, mehrerer oder sämtlicher Bestandteile der Anlage beschreibende Betriebsinformationen zu erzeugen. Über entsprechende Betriebsinformationen lassen sich z. B. aktuell und/oder künftig durchgeführte Verarbeitungsprozesse jeweiliger Bestandteile der Anlage erfassen.

Die Erfassungseinrichtung kann auch eingerichtet sein kann, alternativ oder ergänzend zu entsprechenden Ressourceninformation aktuelle und/oder künftige Zustandsinformationen einzelner, mehrerer oder sämtlicher Bestandteile der Anlage zu erfassen und eine den aktuellen und/oder künftigen Zustand einzelner, mehrerer oder sämtlicher Bestandteile der Anlage beschreibende Zustandsinformationen zu erzeugen. Über entsprechende Zustandsinformationen lassen sich z. B. aktuell und/oder künftig durchzuführende Service- oder Reparaturarbeiten jeweiliger Bestandteile der Anlage oder diesen zugehörige Funktionseinheiten, wie z. B. Formwerkzeuge, im Sinne einer "predictive maintenance" erfassen.

Die Steuerungseinrichtung kann eingerichtet sein, Ressourceninformationen über Mittel der künstlichen Intelligenz bzw. des maschinellen Lernens zu verarbeiten, um eine sich selbst optimierendes System zu realisieren. Derart kann ein proaktives "Verhalten" der Anlage z. B. im Rahmen einer Planung des Betriebs des Anlage realisiert werden.

Die Steuerungseinrichtung kann, wie angedeutet, eingerichtet sein, der Steuerung des Betriebs des ersten Formteilautomaten und/oder des wenigstens einen weiteren Formteilautomaten (sofern vorhanden) und/oder des wenigstens einen Funktionsmoduls wenigstens ein Zielkriterium zugrunde zu legen. Die Steuerungseinrichtung kann sonach eingerichtet sein, den Betrieb der Anlage auf Grundlage einer entsprechenden Ressourceninformation, jedoch unter Berücksichtigung wenigstens eines Zielkriteriums zu steuern. Ein entsprechendes Zielkriterium kann z. B. seitens des Betreibers der Anlage oder, gegebenenfalls automatisierbar bzw. automatisiert, von einer hardware- und/oder softwaremäßig implementierten Einrichtung definiert werden. Eine entsprechende Einrichtung kann, gegebenenfalls entsprechend "trainierte", Mittel der Künstlichen Intelligenz und/oder des maschinellen Lernens umfassen.

Ein entsprechendes Zielkriterium kann z. B. einen bestimmten Energieverbrauch, insbesondere einen minimalen oder einen maximalen Energieverbrauch, der Anlage oder wenigstens eines bestimmten Bestandteils der Anlage definieren. Die Steuerungseinrichtung kann sonach eingerichtet sein, den Betrieb der Anlage oder wenigstens eines bestimmten Bestandteils der Anlage auf Grundlage einer entsprechenden Ressourceninformation, jedoch unter Berücksichtigung wenigstens eines einen bestimmten Energieverbrauch der Anlage oder wenigstens eines bestimmten Bestandteils der Anlage definierenden Zielkriteriums zu steuern. Derart lässt sich der Energieverbrauch, d. h. z. B. der Verbrauch an elektrischer, pneumatischer oder thermischer Energie, der Anlage oder wenigstens eines bestimmten Bestandteils der Anlage, wie z. B. eines Formteilautomaten und/oder eines Funktionsmoduls, beeinflussen.

Alternativ oder ergänzend kann ein entsprechendes Zielkriterium einen bestimmten Prozessfluidverbrauch, insbesondere einen minimalen oder einen maximalen Prozessfluidverbrauch, der Anlage oder wenigstens eines bestimmten Bestandteils der Anlage definieren. Die Steuerungseinrichtung kann sonach eingerichtet sein, den Betrieb der Anlage oder wenigstens eines bestimmten Bestandteils der Anlage auf Grundlage einer entsprechenden Ressourceninformation, jedoch unter Berücksichtigung wenigstens eines einen bestimmten Prozessfluidverbrauch der Anlage oder wenigstens eines bestimmten Bestandteils der Anlage definierenden Zielkriteriums zu steuern. Derart lässt sich der Prozessfluidverbrauch, d. h. z. B. der Verbrauch an Dampf, Druckluft oder Wasser, der Anlage oder wenigstens eines bestimmten Bestandteils der Anlage, wie z. B. eines Formteilautomaten und/oder eines Funktionsmoduls, beeinflussen.

Alternativ oder ergänzend kann ein entsprechendes Zielkriterium eine bestimmte Effizienz, insbesondere eine minimale oder eine maximale Effizienz, der Anlage oder wenigstens eines bestimmten Bestandteils der Anlage definieren. Die Steuerungseinrichtung kann sonach eingerichtet sein, den Betrieb der Anlage oder wenigstens eines bestimmten Bestandteils der Anlage auf Grundlage einer entsprechenden Ressourceninformation, jedoch unter Berücksichtigung wenigstens eines eine bestimmte Effizienz der Anlage oder wenigstens eines bestimmten Bestandteils der Anlage, definierenden Zielkriteriums zu steuern. Derart lässt sich die Effizienz der Anlage oder wenigstens eines bestimmten Bestandteils der Anlage, wie z. B. eines Formteilautomaten und/oder eines Funktionsmoduls, beeinflussen. Die Effizienz der Anlage kann insbesondere eine relative Betrachtung der vermittels der Anlage herstellbaren Partikelschaumformteile im Hinblick auf eine Bezugsgröße, wie z. B. den Ressourcenverbrauch der Anlage, betreffen.

Alternativ oder ergänzend kann ein entsprechendes Zielkriterium eine bestimmte Produktivität, insbesondere eine minimale oder eine maximale Produktivität, der Anlage oder wenigstens eines bestimmten Bestandteils der Anlage definieren. Die Steuerungseinrichtung kann sonach eingerichtet sein, den Betrieb der Anlage oder wenigstens eines bestimmten Bestandteils der Anlage auf Grundlage einer entsprechenden Ressourceninformation, jedoch unter Berücksichtigung wenigstens eines eine bestimmte Produktivität der Anlage oder wenigstens eines bestimmten Bestandteils der Anlage definierenden Zielkriteriums zu steuern. Derart lässt sich die Produktivität der Anlage oder wenigstens eines bestimmten Bestandteils der Anlage, wie z. B. eines Formteilautomaten und/oder eines Funktionsmoduls, beeinflussen. Die Produktivität der Anlage kann insbesondere eine absolute Betrachtung der vermittels der Anlage herstellbaren Partikelschaumformteile betreffen.

Wie erwähnt, kann die Steuerungseinrichtung eingerichtet sein, den Betrieb wenigstens eines bestimmten Bestandteils der Anlage, d. h. z. B. wenigstens eines Formteilautomaten und/oder wenigstens eines Funktionsmoduls, auf Grundlage einer entsprechenden Ressourceninformation zu steuern.

Die Steuerungseinrichtung kann sonach insbesondere eingerichtet sein, wenigstens einen Betriebsparameter, insbesondere eine Leistung bzw. Leistungsaufnahme, des wenigstens einen ersten Formteilautomaten und/oder des wenigstens einen weiteren Formteilautomaten (sofern vorhanden) und/oder des wenigstens einen Funktionsmoduls auf Grundlage der Ressourceninformation zu steuern. Eine Steuerung wenigstens eines Betriebsparameters des ersten Formteilautomaten und/oder des wenigstens einen weiteren Formteilautomaten und/oder des wenigstens einen Funktionsmoduls stellt eine zweckmäßige Möglichkeit dar, den Betrieb der Anlage im Hinblick auf ein Zielkriterium zu steuern. Insbesondere ist ein im Hinblick auf ein Zielkriterium zweckmäßiger koordinierter, d. h. insbesondere zeitlich gestaffelter, Leistungsabruf des ersten Formteilautomaten und/oder des wenigstens einen weiteren Formteilautomaten und/oder des wenigstens einen Funktionsmoduls möglich. Derart lassen sich Spitzenlastsituationen bestimmter Bestandteile der Anlage oder der gesamten Anlage steuerungstechnisch koordinieren und somit insbesondere auch vermeiden.

Alternativ oder ergänzend kann die Steuerungseinrichtung insbesondere eingerichtet sein, wenigstens einen Anfangszeitpunkt und/oder einen Endzeitpunkt des Betriebs des wenigstens einen ersten Formteilautomaten und/oder des wenigstens einen weiteren Formteilautomaten (sofern vorhanden) und/oder des wenigstens einen Funktionsmoduls zu steuern. Eine Steuerung eines Anfangszeitpunkts und/oder eines Endzeitpunkts des Betriebs des ersten Formteilautomaten und/oder des wenigstens einen weiteren Formteilautomaten und/oder des wenigstens einen Funktionsmoduls stellt ebenso eine zweckmäßige Möglichkeit dar, den Betrieb der Anlage im Hinblick auf ein Zielkriterium zu steuern. Insbesondere ist eine im Hinblick auf ein Zielkriterium zweckmäßige koordinierte, d. h. insbesondere zeitlich gestaffelte, Festlegung von Anfangszeitpunkten und/oder Endzeitpunkten des Betriebs des wenigstens einen ersten Formteilautomaten und/oder des wenigstens einen weiteren Formteilautomaten und/oder des wenigstens einen Funktionsmoduls möglich. Derart lassen sich ebenso Spitzenlastsituationen bestimmter Bestandteile der Anlage oder der gesamten Anlage steuerungstechnisch koordinieren und somit insbesondere auch vermeiden.

Alternativ oder ergänzend kann die Steuerungseinrichtung eingerichtet sein, wenigstens einen Anfangszeitpunkt und/oder einen Endzeitpunkt wenigstens eines bestimmten Arbeitsprozesses des wenigstens einen ersten Formteilautomaten und/oder des wenigstens einen weiteren Formteilautomaten und/oder des wenigstens einen Funktionsmoduls auf Grundlage der Ressourceninformation zu steuern. Eine Steuerung eines Anfangszeitpunkts und/oder eines Endzeitpunkts eines Arbeitsprozesses des ersten Formteilautomaten und/oder des wenigstens einen weiteren Formteilautomaten und/oder des wenigstens einen Funktionsmoduls stellt ebenso eine zweckmäßige Möglichkeit dar, den Betrieb der Anlage im Hinblick auf ein Zielkriterium zu steuern. Insbesondere ist eine im Hinblick auf ein Zielkriterium zweckmäßige koordinierte, d. h. insbesondere zeitlich gestaffelte, Festlegung von Anfangszeitpunkten und/oder Endzeitpunkten von Arbeitsprozessen des wenigstens einen ersten Formteilautomaten und/oder des wenigstens einen weiteren Formteilautomaten und/oder des wenigstens einen Funktionsmoduls möglich. Derart lassen sich ebenso Spitzenlastsituationen bestimmter Bestandteile der Anlage oder der gesamten Anlage steuerungstechnisch koordinieren und somit insbesondere auch vermeiden.

Die Steuerungseinrichtung kann ferner eingerichtet sein, auf Grundlage einer Ressourceninformation Ressourcen, d. h. insbesondere Prozessfluide, weiter insbesondere vorkonditionierte Prozessfluide, innerhalb der Anlage, d. h. insbesondere unter entsprechenden Formteilautomaten und/oder Funktionsmodulen der Anlage, zu verteilen. Derart lassen sich Spitzenverbrauchssituationen in bestimmten Bestandteilen der Anlage steuerungstechnisch koordinieren und somit insbesondere auch vermeiden.

Die Steuerungseinrichtung kann insbesondere eingerichtet sein, der Verteilung der Ressourcen wenigstens ein Zielkriterium zugrunde zu legen. Die Steuerungseinrichtung kann sonach eingerichtet sein, die Verteilung von Ressourcen, wie z. B. Energieträgern und/oder Prozessfluiden, innerhalb der Anlage unter Berücksichtigung wenigstens eines Zielkriteriums zu steuern. Ein entsprechendes Zielkriterium kann z. B. seitens des Betreibers der Anlage oder, gegebenenfalls automatisierbar bzw. automatisiert, von einer hardware- und/oder softwaremäßig implementierten Einrichtung definiert werden. Eine entsprechende Einrichtung kann, gegebenenfalls entsprechend "trainierte", Mittel der Künstlichen Intelligenz und/oder des maschinellen Lernens umfassen.

Ein entsprechendes Zielkriterium kann eine gleichmäßige oder ungleichmäßige Verteilung von Ressourcen innerhalb der Anlage definieren. Über eine entsprechende gleichmäßige oder ungleichmäßige Verteilung von Ressourcen innerhalb der Anlage lässt sich typischerweise auch der Verbrauch von Ressourcen im Betrieb der Anlage beeinflussen, sodass über eine entsprechende gleichmäßige oder ungleichmäßige Verteilung von Ressourcen innerhalb der Anlage auch ein Mittel zur zumindest zeitweisen gleichmäßigen oder ungleichmäßigen Verbrauch von Ressourcen innerhalb der Anlage gegeben ist. Konkret können derart Situationen vermieden werden, in welchen bestimmte Bestandteile der Anlage, z. B. im Hinblick auf ihre gegebene Kapazität, zu wenig Ressourcen, d. h. z. B. zu wenig Prozessfluid, zu wenig Kunststoffpartikel, etc. und/oder bestimmte Bestandteile der Anlage, z. B. im Hinblick auf ihre gegebene Kapazität, zu viele Ressourcen, d. h. z. B. zu viel Prozessfluid, zu viel Kunststoffpartikel, etc. erhalten, vermieden werden, sodass insgesamt eine effiziente Verteilung von Ressourcen innerhalb der Anlage möglich ist.

Die Steuerungseinrichtung kann ferner eingerichtet sein, eine Ressourceninformation mit einer Referenzressourceninformation zu vergleichen und eine ein entsprechendes Vergleichsergebnis beschreibende Vergleichsinformation zu erzeugen. Die Steuerungseinrichtung kann dabei eingerichtet sein, eine entsprechende Vergleichsinformation bzw. ein entsprechendes Vergleichsergebnis im Hinblick auf wenigstens ein Auswertekriterium auszuwerten, etwa um aktuelle und/oder künftige Abweichungen von einer entsprechenden Referenzressourceninformation zu erkennen.

Die Steuerungseinrichtung kann ferner eingerichtet sein, wenigstens eine Maßnahme zur Kompensation eines, insbesondere außerhalb eines vordefinierbaren oder vordefinierten Grenzwerts, liegenden Abweichung zwischen einer Ressourceninformation und einer Referenzressourceninformation zu steuern. Eine entsprechende Maßnahme kann z. B. eine aktive Maßnahme zur Veränderung des aktuellen und/oder künftigen Verbrauchs von Ressourcen, etwa durch eine gezielte zeitweise Außerbetriebnahme oder Inbetriebnahme bestimmter Bestandteile der Anlage, sein.

Die Anlage kann in allen Ausführungsformen eine Datenübertragungseinrichtung, welche zur Übertragung einer oder mehrerer Ressourceninformationen an die Steuerungseinrichtung eingerichtet ist, umfassen. Die Datenübertragungseinrichtung kann hierzu eingerichtet sein, bestimmte lokale oder globale drahtgebundene oder drahtlose Datenübertragungsprotokolle, wie z. B. LAN- oder WLAN-Protokolle, zu implementieren, um entsprechende Ressourceninformationen an die Steuerungseinrichtung zu übertragen.

Die Datenübertragungseinrichtung kann ein oder mehrere mit der Steuerungseinrichtung kommunizierende Datenübertragungselemente umfassen. Insbesondere ist es möglich, dass jedem Bestandteil der Anlage wenigstens ein Datenübertragungselement zuordenbar oder zugeordnet ist, sodass sich von jedem Bestandteil der Anlage, insbesondere zur dortigen Verarbeitung, Daten auf die Steuerungseinrichtung, übertragen lassen. Mithin kann die Datenübertragungseinrichtung ein Datenübertragungs- bzw. Kommunikationsnetzwerk bilden bzw. umfassen, über welches sich, insbesondere in Echtzeit, Daten, d. h. insbesondere Ressourceninformationen, insbesondere zur dortigen Verarbeitung, auf die Steuerungseinrichtung übertragen lassen.

Die Anlage kann in allen Ausführungsformen ferner wenigstens eine Ausgabeeinrichtung zur Ausgabe entsprechender Ressourceninformationen umfassen. Eine entsprechende Ressourceninformationen kann einem Betreiber der Anlage, z. B. in Form einer alphanumerischen und/oder grafischen Darstellung, über eine Ausgabeeinrichtung, diese kann z. B. als Displayeinrichtung ausgebildet sein oder eine solche umfassen, zur Anzeige gebracht werden, sodass der Betreiber sich einen Überblick über den aktuellen und/oder künftigen Verbrauch wenigstens einer Ressource in einem aktuellen und/oder künftigen Betrieb der Anlage verschaffen kann. Selbstverständlich kann eine entsprechende Ausgabeeinrichtung alternativ oder ergänzend auch in ein Endgerät, wie z. B. einen Computer, ein Smartphone, eine Smartbrille, eine Smartwatch, ein Tablet, etc., eines Betreibers der Anlage integriert sein.

Ein zweiter Aspekt der Erfindung betrifft ein Verfahren zur Steuerung des Betriebs einer Anlage zur Herstellung wenigstens eines Partikelschaumformteils gemäß Anspruch 13.

Ein dritter Aspekt der Erfindung betrifft ein Verfahren zur Herstellung wenigstens eines Partikelschaumformteils aus einem expandierbaren oder expandierten Partikelschaummaterial. Das Verfahren zeichnet sich dadurch aus, dass zur Durchführung des Verfahrens eine Anlage nach dem ersten Aspekt der Erfindung verwendet wird.

Sämtliche Ausführungen im Zusammenhang mit der Anlage gemäß dem ersten Aspekt gelten analog für das Verfahren nach dem zweiten Aspekt der Erfindung und für das Verfahren nach dem dritten Aspekt der Erfindung.

Die Erfindung ist anhand von Ausführungsbeispielen in den Zeichnungen näher erläutert. Dabei zeigt:
Fig. 1 eine Prinzipdarstellung einer Anlage zur Herstellung eines Partikelschaumformteils gemäß einem Ausführungsbeispiel;
Fig. 2 eine Prinzipdarstellung einer Anlage zur Herstellung eines Partikelschaumformteils gemäß einem weiteren Ausführungsbeispiel.

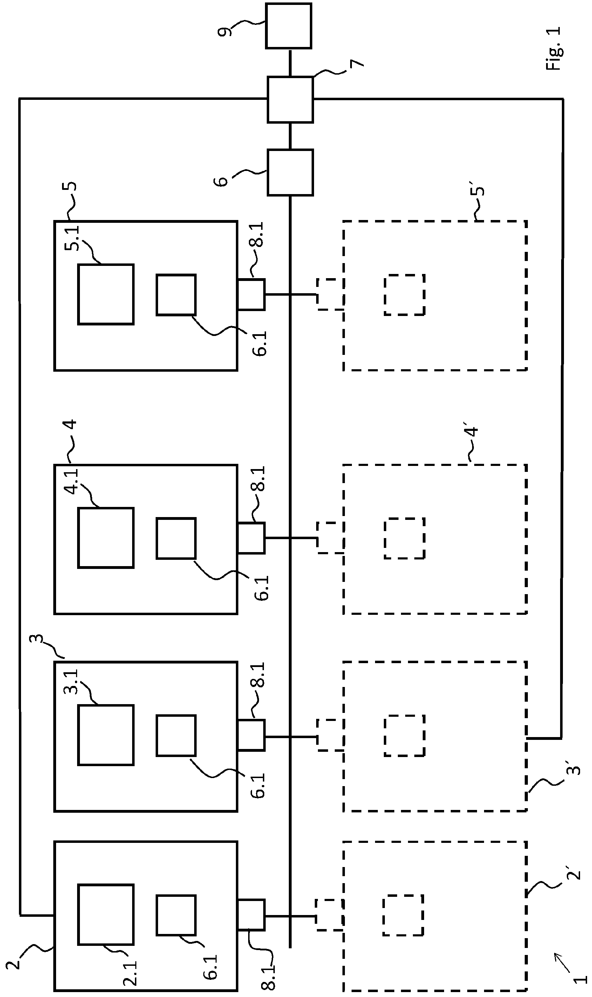

Fig. 1 zeigt eine Prinzipdarstellung einer Anlage 1 zur Herstellung eines Partikelschaumformteils gemäß einem Ausführungsbeispiel.

Die Anlage 1 ist zur Verarbeitung von Kunststoffpartikeln aus wenigstens einem expandierbaren oder expandierten Partikelschaummaterial, d. h. z. B. Kunststoffpartikeln aus expandierbaren oder expandierten Polyolefinen, expandierbaren oder expandierten Polystyrolen, etc., zur Herstellung von Partikelschaumformteilen bzw. Partikelschaumbauteilen eingerichtet und umfasst hierzu Einrichtungen zur Durchführung einer oder mehrerer Arbeitsprozesse zur Verarbeitung von entsprechenden Kunststoffpartikeln zur Herstellung eines Partikelschaumformteils.

Der Begriff "Arbeitsprozess" beinhaltet grundsätzlich jedweden vermittels der Anlage 1 durchführbaren Prozess, welcher direkt oder indirekt mit der Verarbeitung von Kunststoffpartikeln aus wenigstens einem expandierbaren oder expandierten Partikelschaummaterial zur Herstellung eines Partikelschaumformteils in einem Zusammenhang steht.

Die Anlage 1 umfasst mehrere Formteilautomaten 2 - 4. Konkret sind in dem in Fig. 1 gezeigten Ausführungsbeispiel rein beispielhaft drei Formteilautomaten 2 - 4 dargestellt.

Jeder der Formteilautomaten 2 - 4 ist zur Durchführung einer oder mehrerer Verarbeitungsprozesse zur Verarbeitung von Kunststoffpartikeln aus wenigstens einem Partikelschaummaterial zur Herstellung eines Partikelschaumformteils eingerichtet. Die Formteilautomaten 2 kann daher auch als Vorrichtung zur Verarbeitung von Kunststoffpartikeln aus wenigstens einem expandierbaren oder expandierten Partikelschaummaterial bezeichnet bzw. erachtet werden. Jeder Formteilautomat 2 - 4 umfasst eine Formwerkzeugeinrichtung 2.1 - 4.1 zur Verarbeitung von Kunststoffpartikeln aus wenigstens einem expandierbaren oder expandierten Partikelschaummaterial zur Herstellung eines Partikelschaumformteils. Jede Formwerkzeugeinrichtung 2.1 - 4.1 umfasst eine durch ein oder mehrere Formwerkzeugelemente bzw. -hälften (nicht näher gezeigt) definierbare oder definierte Formwerkzeugkavität (ebenso nicht näher gezeigt), innerhalb welcher Kunststoffpartikel aus wenigstens einem expandierbaren oder expandierten Partikelschaummaterial unter Ausbildung entsprechender Partikelschaumformteile verarbeitet werden können. Jeder Formteilautomat 2 - 4 kann eine, z. B. gehäuse-, gestell- oder rahmenartige, Struktur (nicht bezeichnet) umfassen, an oder in welcher wenigstens die jeweilige Formwerkzeugeinrichtung 2.1 - 4.1 angeordnet oder ausgebildet ist.

Die Anlage 1 umfasst zudem wenigstens ein Funktionsmodul 5. Das Funktionsmodul 5 ist zur Durchführung einer oder mehrerer Arbeitsprozesse zur Verarbeitung von Kunststoffpartikeln aus wenigstens einem Partikelschaummaterial zur Herstellung eines Partikelschaumformteils eingerichtet. Das Funktionsmodul 5 umfasst je nach seiner konkreten Funktionalität wenigstens eine Funktionseinheit 5.1, welche zur Durchführung eines oder mehrerer Arbeitsprozesse zur Verarbeitung von Kunststoffpartikeln aus wenigstens einem Partikelschaummaterial zur Herstellung eines Partikelschaumformteils eingerichtet ist. Bei einem entsprechenden Arbeitsprozess kann es sich z. B. um einen Bereitstellungsprozess, um einen Förderprozess, um einen Füllprozess, oder um einen Aufbereitungsprozess handeln. Das Funktionsmodul 5 kann eine, z. B. gehäuse-, gestell- oder rahmenartige, Struktur (nicht bezeichnet) umfassen, an oder in welcher die wenigstens eine Funktionseinheit 5.1 angeordnet oder ausgebildet ist.

Das Funktionsmodul 5 kann konkret beispielsweise als eine Bereitstellungseinrichtung zur Bereitstellung wenigstens einer Ressource, wie z. B. eines Prozessfluids oder Energieträgers, für den wenigstens einen Formteilautomaten 2 - 4 und/oder für wenigstens ein weiteres Funktionsmodul ausgebildet sein oder eine solche umfassen. Der Begriff "Bereitstellung" kann dabei eine Erzeugung oder Speicherung einer Ressource beinhalten. Bei einer Ressource in Form eines Energieträgers kann es sich insbesondere um einen elektrischen Energieträger, wie z. B. Strom oder Spannung, und/oder um einen pneumatischen Energieträger, wie z. B. Druck, und/oder um einen thermischen Energieträger, wie z. B. Wärme, handeln. Bei einer Ressource in Form eines Prozessfluids kann es sich z. B. um Dampf, Druckluft und/oder Wasser handeln.

Ein weiteres konkretes Ausführungsbeispiel eines entsprechenden Funktionsmoduls 5 kann z. B. eine Speichereinrichtung zur zeitweisen Speicherung sowie gegebenenfalls Bereitstellung einer Ressource, wie z. B. eines Prozessfluids oder eines Energieträgers, sein. Ein konkretes Ausführungsbeispiel eines entsprechenden Funktionsmoduls 5 kann z. B. eine Speichereinrichtung zur Speicherung eines Prozessfluids, wie z. B. ein Dampfspeicher, ein Druckluftspeicher oder ein Wasserspeicher, oder eine Speichereinrichtung zur Speicherung eines Energieträgers, wie z. B. ein Stromspeicher, ein Druckspeicher, ein Wärmespeicher, sein.

Alternativ oder ergänzend kann das Funktionsmodul 5 als eine Bereitstellungseinrichtung zur Bereitstellung eines über wenigstens einen Formteilautomaten 2 - 4 verarbeitbaren oder zu verarbeitbaren expandierbaren oder expandierten Partikelschaummaterials bzw. entsprechenden Kunststoffpartikeln ausgebildet sein oder eine solche umfassen. Ein konkretes Ausführungsbeispiel des Funktionsmoduls 5 kann z. B. eine Fördereinrichtung zur Förderung eines über wenigstens einen Formteilautomaten 2 - 4 verarbeitbaren oder zu verarbeitbaren expandierbaren oder expandierten Partikelschaummaterials bzw. entsprechender Kunststoffpartikel in wenigstens eine Formwerkzeugkavität wenigstens eines Formteilautomaten 2 - 4 sein.

Alternativ oder ergänzend kann das Funktionsmodul 5 als eine Aufbereitungseinrichtung zur Aufbereitung eines Prozessfluids wenigstens eines Formteilautomaten 2 - 4 und/oder wenigstens eines anderen Funktionsmoduls ausgebildet sein oder eine solche umfassen. Der Begriff "Aufbereitung" kann die Veränderung wenigstens einen chemischen und/oder physikalischen Parameters des jeweiligen Prozessfluids beinhalten.

Anhand der strichliert dargestellten Kästen in Fig. 1 ist schematisch angedeutet, dass die Anlage 1 auch weitere Formteilautomaten 2' - 4' und/oder Funktionsmodule 5' umfassen kann. Grundsätzlich sind beliebige Konfigurationen entsprechender Formteilautomaten und/oder Funktionsmodule möglich.

Sowohl die jeweiligen Formteilautomaten 2 - 4 als auch das Funktionsmodul 5 kann können Schnittstellen (nicht gezeigt) zur, insbesondere funktionellen und/oder konstruktiven, Kopplung an den wenigstens einen weiteren Formteilautomaten 2 - 4 und/oder wenigstens ein weiteres Funktionsmodul aufweisen. Bei entsprechenden Schnittstellen kann es sich entsprechend um funktionelle und/oder konstruktive Schnittstellen handeln. Entsprechende Schnittstellen können sonach eingerichtet sein, eine individuelle funktionelle und/oder konstruktive Kopplung von Formteilautomaten 2 - 4 und/oder Funktionsmodulen 5, 5' herzustellen. Die Schnittstellen ermöglichen dabei insbesondere ein direktes Ankoppeln von Formteilautomaten 2 - 4 und/oder Funktionsmodulen an- bzw. miteinander, insbesondere derart, dass jeweilige formteilautomatseitige bzw. funktionsmodulseitige Strukturen bzw. Gehäusestrukturen direkt an- bzw. miteinander koppelbar oder angekoppelt sind.

Im Rahmen des Betriebs der Anlage 1 werden Ressourcen verbraucht. Ressourcen sind insbesondere Prozessfluide, wie z. B. Dampf und/oder Druckluft und/oder Wasser, und/oder ein zum Betrieb des ersten Formteilautomaten und/oder des wenigstens einen weiteren Formteilautomaten und/oder des wenigstens einen Funktionsmoduls erforderliche Energieträger, wie z. B. elektrische, pneumatische und/oder thermische Energieträger.

Die Anlage 1 umfasst weiterhin eine hardware- und/oder softwaremäßig implementierte Erfassungseinrichtung 6. Die Erfassungseinrichtung 6 ist zur Erfassung einer den aktuellen und/oder künftigen Verbrauch wenigstens einer Ressource, d. h. insbesondere eines Prozessfluids oder eines Energieträgers, in einem aktuellen und/oder künftigen Betrieb einzelner, mehrerer oder sämtlicher Formteilautomaten 2 - 4 und/oder einzelner, mehrere oder sämtlicher Funktionsmodule 5 beschreibenden Ressourceninformation eingerichtet. Über die Erfassungseinrichtung 6 lässt sich sonach in Form einer entsprechenden Ressourceninformation eine Angabe bzw. Kenntnis über den aktuellen bzw. künftigen Verbrauch einer oder mehrerer im Rahmen des Betriebs der Anlage 1 oder wenigstens eines Bestandteils der Anlage 1, d. h. z. B. der Formteilautomaten 2 - 4 und des Funktionsmoduls 5, verbrauchter Ressourcen erzeugen.

Die Erfassungseinrichtung 6 umfasst in dem Ausführungsbeispiel mehrere innerhalb der Anlage 1 verteilt angeordnete oder ausgebildete Erfassungselemente 6.1, d. h. z. B. Sensorelemente, Verbrauchszählerelemente, etc., deren Erfassungsinformationen sich von der Erfassungseinrichtung 6, d. h. insbesondere entsprechenden Verarbeitungsalgorithmen der Erfassungseinrichtung 6, zu einer entsprechenden Ressourceninformation verarbeiten lassen. Anhand des Ausführungsbeispiels gemäß Fig. 1 ist ersichtlich, dass den Bestandteilen der Anlage 1 jeweils wenigstens ein entsprechendes Erfassungselement 6.1 zugeordnet sein kann, über welche sich eine den aktuellen und/oder künftigen Verbrauch einer oder mehrerer für den Betrieb des jeweiligen Bestandteils erforderlicher Ressource(n) bzw. einer oder mehrerer im Rahmen des Betriebs des jeweiligen Bestandteils verbrauchter Ressource(n) beschreibende Erfassungsinformationen (Verbrauchserfassungsinformationen) erzeugen lässt, auf Grundlage welcher die Erfassungseinrichtung 6 die Ressourceninformation erzeugt.

Zur Erzeugung entsprechender Ressourceninformation kann die Erfassungseinrichtung 6 dabei grundsätzlich jede Information - diese kann, wie erwähnt, z. B. von einem Formteilautomaten 2 - 4 und/oder einem Funktionsmodul 5 zuordenbaren oder zugeordneten Erfassungselement 6.1 geliefert werden - verarbeiten, über welche sich der Verbrauch einer oder mehrerer Ressourcen in einem aktuellen und/oder künftigen Betrieb der Anlage 1 beschreiben lässt. Grundsätzlich können hierbei sonach z. B. aktuelle Verbrauchswerte einer, mehrerer oder aller im Rahmen des Betriebs der Anlage 1 verbrauchter Ressourcen und/oder, z. B. aus einer Betriebsplanung der Anlage 1, gewonnene künftige Verbrauchswerte einer, mehrerer oder aller im Rahmen des Betriebs der Anlage 1 verbrauchter Ressourcen berücksichtigt und entsprechend zu einer Ressourceninformation verarbeitet werden.

Die Erfassungseinrichtung 6 kann eingerichtet sein, spezifische Ressourceninformationen für bestimmte Ressourcen, d. h. Ressourceninformationen, welche den aktuellen und/oder künftigen Verbrauch einer oder mehrerer bestimmter Ressourcen beschreiben, zu erzeugen. Spezifische Ressourceninformation können z. B. für bestimmte Prozessfluide und/oder bestimmte Energieträger erzeugt werden. Ein konkretes Beispiel ist sonach eine Ressourceninformation, welche den aktuellen und/oder künftigen Verbrauch von Dampf oder Druckluft oder Wasser als jeweilige Beispiele für spezifische Prozessfluide beschreibt. Ein weiteres konkretes Beispiel ist eine Ressourceninformation, welche den aktuellen und/oder künftigen Verbrauch von elektrischer, pneumatischer oder thermischer Energie als jeweilige Beispiele für spezifische Energieträger beschreibt.

Alternativ kann die Erfassungseinrichtung 6 eingerichtet sein, spezifische Ressourceninformationen für bestimmte Bestandteile der Anlage 1, d. h. Ressourceninformationen, welche den aktuellen und/oder künftigen Verbrauch einer oder mehrerer bestimmter Bestandteile der Anlage 1 beschreiben, zu erzeugen. Spezifische Ressourceninformation können z. B. für bestimmte Formteilautomaten 2 - 4 und/oder bestimmte Funktionsmodule 5 erzeugt werden. Ein konkretes Beispiel ist sonach eine Ressourceninformation, welche den aktuellen und/oder künftigen Verbrauch einer Ressource für wenigstens einen spezifischen Formteilautomaten 2 - 4 oder eine Gruppe spezifischer Formteilautomaten 2 - 4, insbesondere eine Gruppe gleich oder ähnlich konfigurierter Formteilautomaten 2 - 4, beschreibt. Ein weiteres konkretes Beispiel ist eine Ressourceninformation, welche den aktuellen und/oder künftigen Verbrauch einer Ressource für wenigstens ein spezifisches Funktionsmodul 5 oder eine Gruppe spezifischer Funktionsmodule 5, insbesondere eine Gruppe gleich oder ähnlich konfigurierter Funktionsmodule 5, beschreibt.

Selbstverständlich kann eine Ressourceninformation auch sowohl spezifische Ressourceninformationen für bestimmte Ressourcen als auch spezifische Ressourceninformationen für bestimmte Bestandteile der Anlage 1 beschreiben. Mithin lassen sich über entsprechende Ressourceninformationen sehr detaillierte Auskünfte über den aktuellen und/oder künftigen Ressourcenverbrauch innerhalb der Anlage 1 beschreiben.

Über entsprechende Ressourceninformationen können sonach, gegebenenfalls örtlich und/oder zeitlich aufgelöst, qualitativ oder quantitativ Kenntnisse über den aktuellen und/oder künftigen Verbrauch einer oder mehrerer für den Betrieb der Anlage 1 oder entsprechender Bestandteile der Anlage 1, wie z. B. Formteilautomaten 2 - 4 und/oder Funktionsmodule 5, 5' erforderlicher Ressourcen respektive im Rahmen des Betriebs der Anlage 1 verbrauchter Ressourcen erhalten werden, welche der Steuerung des Betriebs der Anlage 1, etwa im Hinblick auf eine möglichst effiziente Nutzung entsprechender Ressourcen zugrunde gelegt werden können.

Mithin können über entsprechende Ressourceninformationen präventiv bestimmte Ressourcenverbräuche der Anlage 1 bzw. einzelner Funktionsmodule 5, 5' der Anlage 1 bestimmt reden, was eine effiziente Steuerung der Anlage 1 z. B. im Hinblick auf die erwähnte Nutzung entsprechender Ressourcen, jedoch beispielsweise auch im Hinblick auf die Verringerung von Totzeiten bestimmter Funktionsmodule 5, 5' ermöglicht.

Beispielsweise kann ein für den Betrieb wenigstens eines ersten Formteilautomaten 2 - 4 und/oder wenigstens eines ersten Funktionsmoduls 5, 5' erforderlicher aktueller oder künftiger Ressourcenverbrauch innerhalb der Anlage 1 an wenigstens einen weiteren Formteilautomaten 2 - 4 und/oder an wenigstens ein weiteres Funktionsmodul 5, 5' übermittelt werden, sodass die für den Betrieb des wenigstens einen ersten Formteilautomaten 2 - 4 und/oder des wenigstens einen ersten Funktionsmoduls 5, 5' erforderliche Ressource rechtzeitig über den wenigstens einen weiteren Formteilautomaten 2 - 4 und/oder über das wenigstens eine weitere Funktionsmodul 5, 5' bereitgestellt werden kann.

Konkret kann z. B. ein aktueller oder künftiger Ressourcenverbrauch - hierunter ist grundsätzlich auch ein Ressourcenbedarf zu verstehen - für den Betrieb eines Formteilautomaten 2 - 4, d. h. z. B. eines Prozessmediums, wie etwa Heißdampf, innerhalb der Anlage 1 an einen Dampferzeuger als Beispiel für ein Funktionsmodul 5, 5' übermittelt werden, sodass der Dampferzeuger die für den Betrieb des Formteilautomaten 2 - 4 erforderliche Menge des Prozessfluids gewünschter Eigenschaften, wie z. B. eines gewünschten Drucks, einer gewünschten Temperatur, etc., erzeugt bzw. bereitstellt.

Die Erfassungseinrichtung 6 kann eingerichtet sein, entsprechende Ressourceninformationen kontinuierlich, quasikontinuierlich oder diskontinuierlich zu erzeugen.

Grundsätzlich ist es möglich, dass allein die jeweiligen Erfassungselemente 6.1 die bzw. eine entsprechende Erfassungseinrichtung der Anlage 1 bilden, sodass entgegen der beispielhaften Darstellung gemäß Fig. 1 keine gesonderte Erfassungseinrichtung vorhanden sein muss. Vielmehr kann durch jeweilige Erfassungselemente 6.1 eine netzwerk- bzw. schwarmartig verteilte Anordnung entsprechender Erfassungselemente 6.1 eine nicht "hierarchische Intelligenz" realisiert werden.

Weiterhin umfasst die Anlage 1 eine hardware- und/oder softwaremäßig implementierte Steuerungseinrichtung 7. Die Steuerungseinrichtung 7 - bei welcher es sich um einen zentralen Leitstand der Anlage 1 handeln kann - ist zur Steuerung des Betriebs der Anlage 1, d. h. insbesondere der Formteilautomaten 2 - 4 und/oder des Funktionsmoduls 5, auf Grundlage einer entsprechenden Ressourceninformation eingerichtet. Über die Steuerung des Betriebs der Anlage 1 lässt sich auch der Verbrauch einer, mehrerer oder aller in einem aktuellen und/oder künftigen Betrieb der Anlage verbrauchter Ressourcen beeinflussen. Derart kann ein, z. B. im Hinblick auf ein Zielkriterium, wie z. B. den Ressourcenverbrauch, optimierter Betrieb der Anlage 1 realisiert werden.

Die mit den Bestandteilen der Anlage 1 über rein schematisch angedeutete Datenverbindungen kommunizierende Steuerungseinrichtung 6 kann dabei im Sinne eines Hubs aktuelle Verbrauchswerte, etc. einzelner, mehrerer oder sämtlicher Bestandteile der Anlage 1 als Grundlage für eine optimierte Steuerung des Betriebs der Anlage 1 verwenden. Eine entsprechende Steuerung des Betriebs der Anlage 1 kann sich selbstverständlich auch positiv auf die Qualität der vermittels der Anlage 1 herstellbaren bzw. hergestellten Partikelschaumformteile bzw. deren Reproduzierbarkeit auswirken.

Durch das Zusammenwirken der Erfassungseinrichtung 6 und der Steuerungseinrichtung 7 und somit durch die Möglichkeit, der gezielten Steuerung des Betriebs der Anlage 1 entsprechende Ressourceninformation zugrunde zu legen, d. h. insbesondere den Betrieb der Anlage 1 oder bestimmter Bestandteile der Anlage 1 in Abhängigkeit entsprechender Ressourceninformation zu steuern, ist eine Möglichkeit gegeben, den Betrieb der Anlage 1 im Hinblick auf eine effiziente Nutzung von Ressourcen zu steuern. Dies beinhaltet auch die Möglichkeit, Abrufe von Ressourcen, Partikelschaummaterialien, etc. im Hinblick auf eine aktuelle und/oder künftige Betriebssituation der Anlage 1 bzw. einzelner, mehrerer oder sämtlicher Bestandteile der Anlage 1 zu steuern und gegebenenfalls auch zu optimieren, und/oder Funktionsausfälle oder -einschränkungen bestimmter Bestandteile der Anlage 1 zu kompensieren.

Die Erfassungseinrichtung 6 kann eingerichtet sein kann, alternativ oder ergänzend zu entsprechenden Ressourceninformation aktuelle und/oder künftige Betriebsinformationen einzelner, mehrerer oder sämtlicher Bestandteile der Anlage 1 zu erfassen und eine den aktuellen und/oder künftigen Betrieb einzelner, mehrerer oder sämtlicher Bestandteile der Anlage 1 beschreibende Betriebsinformationen zu erzeugen. Über entsprechende Betriebsinformationen lassen sich z. B. aktuell und/oder künftig durchgeführte Verarbeitungsprozesse jeweiliger Bestandteile der Anlage 1 erfassen.

Die Erfassungseinrichtung 6 kann auch eingerichtet sein kann, alternativ oder ergänzend zu entsprechenden Ressourceninformation aktuelle und/oder künftige Zustandsinformationen einzelner, mehrerer oder sämtlicher Bestandteile der Anlage 1 zu erfassen und eine den aktuellen und/oder künftigen Zustand einzelner, mehrerer oder sämtlicher Bestandteile der Anlage 1 beschreibende Zustandsinformationen zu erzeugen. Über entsprechende Zustandsinformationen lassen sich z. B. aktuell und/oder künftig durchzuführende Service- oder Reparaturarbeiten jeweiliger Bestandteile der Anlage 1 oder diesen zugehörige Funktionseinheiten, wie z. B. Formwerkzeuge, im Sinne einer "predictive maintenance" erfassen.

Die Steuerungseinrichtung 7 kann eingerichtet sein, Ressourceninformationen über Mittel der künstlichen Intelligenz bzw. des maschinellen Lernens zu verarbeiten, um eine sich selbst optimierendes System zu realisieren. Derart kann ein proaktives "Verhalten" der Anlage 1 z. B. im Rahmen einer Planung des Betriebs der Anlage 1 realisiert werden.

Die Steuerungseinrichtung 7 kann, wie angedeutet, eingerichtet sein, der Steuerung des Betriebs der Formteilautomaten 2 - 4 und/oder des Funktionsmoduls 5 wenigstens ein Zielkriterium zugrunde zu legen. Die Steuerungseinrichtung 7 kann sonach eingerichtet sein, den Betrieb der Anlage 1 auf Grundlage einer entsprechenden Ressourceninformation, jedoch unter Berücksichtigung wenigstens eines Zielkriteriums zu steuern. Ein entsprechendes Zielkriterium kann z. B. seitens des Betreibers der Anlage 1 oder, gegebenenfalls automatisierbar bzw. automatisiert, von einer hardware- und/oder softwaremäßig implementierten Einrichtung definiert werden. Eine entsprechende Einrichtung kann, gegebenenfalls entsprechend "trainierte", Mittel der Künstlichen Intelligenz und/oder des maschinellen Lernens umfassen.

Ein entsprechendes Zielkriterium kann z. B. einen bestimmten Energieverbrauch, insbesondere einen minimalen oder einen maximalen Energieverbrauch, der Anlage oder wenigstens eines bestimmten Bestandteils der Anlage definieren. Die Steuerungseinrichtung 7 kann sonach eingerichtet sein, den Betrieb der Anlage 1 oder wenigstens eines bestimmten Bestandteils der Anlage 1 auf Grundlage einer entsprechenden Ressourceninformation, jedoch unter Berücksichtigung wenigstens eines einen bestimmten Energieverbrauch der Anlage oder wenigstens eines bestimmten Bestandteils der Anlage 1 definierenden Zielkriteriums zu steuern.

Alternativ oder ergänzend kann ein entsprechendes Zielkriterium einen bestimmten Prozessfluidverbrauch, insbesondere einen minimalen oder einen maximalen Prozessfluidverbrauch, der Anlage 1 oder wenigstens eines bestimmten Bestandteils der Anlage 1 definieren. Die Steuerungseinrichtung 7 kann sonach eingerichtet sein, den Betrieb der Anlage 1 oder wenigstens eines bestimmten Bestandteils der Anlage 1 auf Grundlage einer entsprechenden Ressourceninformation, jedoch unter Berücksichtigung wenigstens eines einen bestimmten Prozessfluidverbrauch der Anlage 1 oder wenigstens eines bestimmten Bestandteils der Anlage 1 definierenden Zielkriteriums zu steuern.

Alternativ oder ergänzend kann ein entsprechendes Zielkriterium eine bestimmte Effizienz, insbesondere eine minimale oder eine maximale Effizienz, der Anlage 1 oder wenigstens eines bestimmten Bestandteils der Anlage 1 definieren. Die Steuerungseinrichtung kann sonach eingerichtet sein, den Betrieb der Anlage 1 oder wenigstens eines bestimmten Bestandteils der Anlage 1 auf Grundlage einer entsprechenden Ressourceninformation, jedoch unter Berücksichtigung wenigstens eines eine bestimmte Effizienz der Anlage 1 oder wenigstens eines bestimmten Bestandteils der Anlage 1, definierenden Zielkriteriums zu steuern.

Alternativ oder ergänzend kann ein entsprechendes Zielkriterium eine bestimmte Produktivität, insbesondere eine minimale oder eine maximale Produktivität, der Anlage 1 oder wenigstens eines bestimmten Bestandteils der Anlage 1 definieren. Die Steuerungseinrichtung 7 kann sonach eingerichtet sein, den Betrieb der Anlage 1 oder wenigstens eines bestimmten Bestandteils der Anlage 1 auf Grundlage einer entsprechenden Ressourceninformation, jedoch unter Berücksichtigung wenigstens eines eine bestimmte Produktivität der Anlage 1 oder wenigstens eines bestimmten Bestandteils der Anlage 1 definierenden Zielkriteriums zu steuern.

Die Steuerungseinrichtung 7 kann eingerichtet sein, wenigstens einen Betriebsparameter, insbesondere eine Leistung bzw. Leistungsaufnahme, des wenigstens eines Formteilautomaten 2 - 4 und/oder des Funktionsmoduls 5 auf Grundlage der Ressourceninformation zu steuern. Eine Steuerung wenigstens eines Betriebsparameters wenigstens eines Formteilautomaten 2 - 4 und/oder des Funktionsmoduls 5 stellt eine zweckmäßige Möglichkeit dar, den Betrieb der Anlage 1 im Hinblick auf ein Zielkriterium zu steuern. Insbesondere ist ein im Hinblick auf ein Zielkriterium zweckmäßiger koordinierter, d. h. insbesondere zeitlich gestaffelter, Leistungsabruf der Formteilautomaten und/oder des Funktionsmoduls 5 möglich. Derart lassen sich Spitzenlastsituationen bestimmter Bestandteile der Anlage 1 oder der gesamten Anlage 1 steuerungstechnisch koordinieren und somit insbesondere auch vermeiden.

Alternativ oder ergänzend kann die Steuerungseinrichtung 7 sein, wenigstens einen Anfangszeitpunkt und/oder einen Endzeitpunkt des Betriebs wenigstens Formteilautomaten 2 - 4 und/oder des Funktionsmoduls 5 zu steuern. Eine Steuerung eines Anfangszeitpunkts und/oder eines Endzeitpunkts des Betriebs eines oder mehrerer Formteilautomaten 2 - 4 und/oder eines oder mehrerer Funktionsmodule 5 stellt ebenso eine zweckmäßige Möglichkeit dar, den Betrieb der Anlage 1 im Hinblick auf ein Zielkriterium zu steuern. Insbesondere ist eine im Hinblick auf ein Zielkriterium zweckmäßige koordinierte, d. h. insbesondere zeitlich gestaffelte, Festlegung von Anfangszeitpunkten und/oder Endzeitpunkten des Betriebs wenigstens eines Formteilautomaten 2 - 4 und/oder wenigstens eines Funktionsmoduls 5 möglich. Derart lassen sich ebenso Spitzenlastsituationen bestimmter Bestandteile der Anlage 1 oder der gesamten Anlage 1 steuerungstechnisch koordinieren und somit insbesondere auch vermeiden.

Alternativ oder ergänzend kann die Steuerungseinrichtung 7 eingerichtet sein, wenigstens einen Anfangszeitpunkt und/oder einen Endzeitpunkt wenigstens eines bestimmten Arbeitsprozesses wenigstens eines Formteilautomaten 2 - 4 und/oder wenigstens eines Funktionsmoduls 5 auf Grundlage der Ressourceninformation zu steuern. Eine Steuerung eines Anfangszeitpunkts und/oder eines Endzeitpunkts eines Arbeitsprozesses wenigstens eines Formteilautomaten 2 - 4 und/oder wenigstens eines Funktionsmoduls 5 stellt ebenso eine zweckmäßige Möglichkeit dar, den Betrieb der Anlage 1 im Hinblick auf ein Zielkriterium zu steuern. Insbesondere ist eine im Hinblick auf ein Zielkriterium zweckmäßige koordinierte, d. h. insbesondere zeitlich gestaffelte, Festlegung von Anfangszeitpunkten und/oder Endzeitpunkten von Arbeitsprozessen wenigstens eines Formteilautomaten 2 - 4 und/oder wenigstens eines Funktionsmoduls 5 möglich. Derart lassen sich ebenso Spitzenlastsituationen bestimmter Bestandteile der Anlage 1 oder der gesamten Anlage 1 steuerungstechnisch koordinieren und somit insbesondere auch vermeiden.

Die Steuerungseinrichtung 7 kann ferner eingerichtet sein, auf Grundlage einer Ressourceninformation Ressourcen, d. h. insbesondere Prozessfluide, weiter insbesondere vorkonditionierte Prozessfluide, innerhalb der Anlage 1, d. h. insbesondere unter entsprechenden Formteilautomaten 2 - 4 und/oder Funktionsmodulen 5 der Anlage 1, zu verteilen. Derart lassen sich Spitzenverbrauchssituationen in bestimmten Bestandteilen der Anlage 1 steuerungstechnisch koordinieren und somit insbesondere auch vermeiden.

Die Steuerungseinrichtung 7 kann insbesondere eingerichtet sein, die Verteilung von Ressourcen, wie z. B. Energieträgern und/oder Prozessfluiden, innerhalb der Anlage 1 unter Berücksichtigung wenigstens eines Zielkriteriums zu steuern. Ein entsprechendes Zielkriterium kann z. B. seitens des Betreibers der Anlage 1 oder, gegebenenfalls automatisierbar bzw. automatisiert, von einer hardware- und/oder softwaremäßig implementierten Einrichtung definiert werden. Eine entsprechende Einrichtung kann, gegebenenfalls entsprechend "trainierte", Mittel der Künstlichen Intelligenz und/oder des maschinellen Lernens umfassen.

Ein entsprechendes Zielkriterium kann eine gleichmäßige oder ungleichmäßige Verteilung von Ressourcen innerhalb der Anlage 1 definieren. Über eine entsprechende gleichmäßige oder ungleichmäßige Verteilung von Ressourcen innerhalb der Anlage 1 lässt sich typischerweise auch der Verbrauch von Ressourcen im Betrieb der Anlage 1 beeinflussen, sodass über eine entsprechende gleichmäßige oder ungleichmäßige Verteilung von Ressourcen innerhalb der Anlage 1 auch ein Mittel zur zumindest zeitweisen gleichmäßigen oder ungleichmäßigen Verbrauch von Ressourcen innerhalb der Anlage 1 gegeben ist. Konkret können derart Situationen vermieden werden, in welchen bestimmte Bestandteile der Anlage 1, z. B. im Hinblick auf ihre gegebene Kapazität, zu wenig Ressourcen, d. h. z. B. zu wenig Prozessfluid, zu wenig Kunststoffpartikel, etc. und/oder bestimmte Bestandteile der Anlage 1, z. B. im Hinblick auf ihre gegebene Kapazität, zu viele Ressourcen, d. h. z. B. zu viel Prozessfluid, zu viel Kunststoffpartikel, etc. erhalten, vermieden werden, sodass insgesamt eine effiziente Verteilung von Ressourcen innerhalb der Anlage 1 möglich ist.

Die Steuerungseinrichtung 7 kann ferner eingerichtet sein, eine Ressourceninformation mit einer Referenzressourceninformation zu vergleichen und eine ein entsprechendes Vergleichsergebnis beschreibende Vergleichsinformation zu erzeugen. Die Steuerungseinrichtung 7 kann dabei eingerichtet sein, eine entsprechende Vergleichsinformation bzw. ein entsprechendes Vergleichsergebnis im Hinblick auf wenigstens ein Auswertekriterium auszuwerten, etwa um aktuelle und/oder künftige Abweichungen von einer entsprechenden Referenzressourceninformation zu erkennen.

Die Steuerungseinrichtung 7 kann ferner eingerichtet sein, wenigstens eine Maßnahme zur Kompensation eines, insbesondere außerhalb eines vordefinierbaren oder vordefinierten Grenzwerts, liegenden Abweichung zwischen einer Ressourceninformation und einer Referenzressourceninformation zu steuern. Eine entsprechende Maßnahme kann z. B. eine aktive Maßnahme zur Veränderung des aktuellen und/oder künftigen Verbrauchs von Ressourcen, etwa durch eine gezielte zeitweise Außerbetriebnahme oder Inbetriebnahme bestimmter Bestandteile der Anlage 1, sein.

Die Anlage 1 kann die bereits angedeutete Datenübertragungseinrichtung 8, welche zur Übertragung einer oder mehrerer Ressourceninformationen an die Steuerungseinrichtung 7 eingerichtet ist, umfassen. Die Datenübertragungseinrichtung 8 kann hierzu eingerichtet sein, bestimmte lokale oder globale drahtgebundene oder drahtlose Datenübertragungsprotokolle, wie z. B. LAN- oder WLAN-Protokolle, zu implementieren, um entsprechende Ressourceninformationen an die Steuerungseinrichtung 7 zu übertragen.

Die Datenübertragungseinrichtung 8 mehrere mit der Steuerungseinrichtung 8 kommunizierende Datenübertragungselemente 8.1 umfassen. Insbesondere ist es, wie in Fig. 1 beispielhaft gezeigt, möglich, dass jedem Bestandteil der Anlage 1 wenigstens ein Datenübertragungselement zuordenbar oder zugeordnet ist, sodass sich von jedem Bestandteil der Anlage 1, insbesondere zur dortigen Verarbeitung, Daten auf die Steuerungseinrichtung 7, übertragen lassen. Mithin kann die Datenübertragungseinrichtung 8 ein Datenübertragungs- bzw. Kommunikationsnetzwerk bilden bzw. umfassen, über welches sich, insbesondere in Echtzeit, Daten, d. h. insbesondere Ressourceninformationen, insbesondere zur dortigen Verarbeitung, auf die Steuerungseinrichtung 7 übertragen lassen.

Die Anlage 1 kann in allen Ausführungsformen ferner wenigstens eine Ausgabeeinrichtung 9 zur Ausgabe entsprechender Ressourceninformationen umfassen. Eine entsprechende Ressourceninformationen kann einem Betreiber der Anlage 1, z. B. in Form einer alphanumerischen und/oder grafischen Darstellung, über die Ausgabeeinrichtung 9, diese kann z. B. als Displayeinrichtung ausgebildet sein oder eine solche umfassen, zur Anzeige gebracht werden, sodass der Betreiber sich einen Überblick über den aktuellen und/oder künftigen Verbrauch wenigstens einer Ressource in einem aktuellen und/oder künftigen Betrieb der Anlage 1 verschaffen kann. Selbstverständlich kann eine entsprechende Ausgabeeinrichtung 9 alternativ oder ergänzend auch in ein Endgerät, wie z. B. einen Computer, ein Smartphone, eine Smartbrille, eine Smartwatch, ein Tablet, etc., eines Betreibers der Anlage 1 integriert sein.

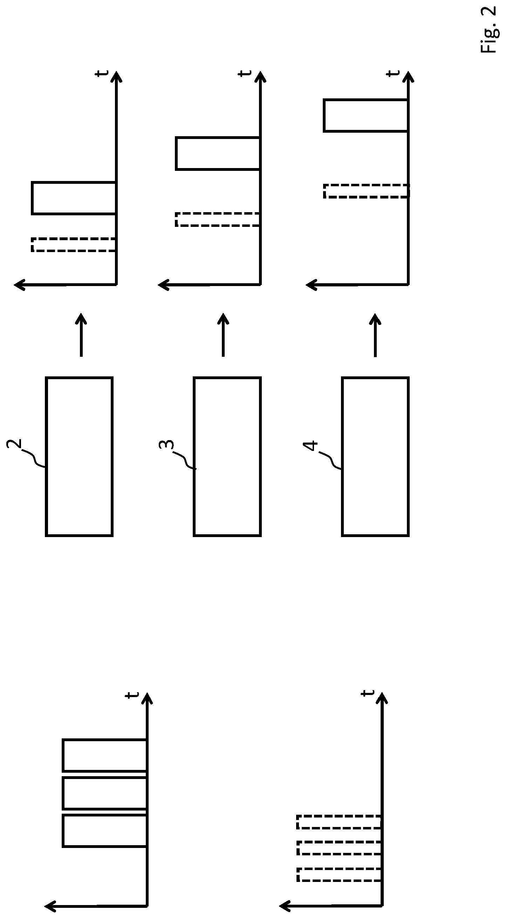

Fig. 2 zeigt eine Prinzipdarstellung einer Anlage 1 zur Herstellung eines Partikelschaumformteils gemäß einem weiteren Ausführungsbeispiel.

Anhand des in Fig. 2 gezeigten Ausführungsbeispiels soll erläutert werden, wie die Steuerungseinrichtung 7 den Betrieb der Formteilautomaten 2 - 4 - Analoges gilt für Funktionsmodule 5 - koordiniert steuern kann, um Spitzenlastsituationen bestimmter Bestandteile der Anlage 1 oder der gesamten Anlage 1 steuerungstechnisch zu koordinieren und somit insbesondere auch zu vermeiden.

Die linken beiden Diagramme in Fig 2 stellen für eine beispielhafte Betriebssituation der Anlage 1 den zeitlichen Bedarf an einem Prozessfluid (oberes Diagramm) und an einem gestrichelt dargestellten Energieträger (unteres Diagramm) dar. Ersichtlich sind diese jeweils gestaffelt, sodass es nicht zu Spitzenlastsituationen kommen kann.

Die Steuerungseinrichtung 7 steuert den Betrieb der Formteilautomaten 2 - 4 hier - wie die drei rechten Diagramme zeigen - gleichermaßen so, dass die Prozessfluide sowie die Energieträger koordiniert, d. h. zeitlich gestaffelt, abgerufen werden, sodass es nicht zu Spitzenlastsituationen kommen kann.

Mit der Anlage 1 gemäß den in den Fig. gezeigten Ausführungsbeispielen lässt sich ein Verfahren zur Steuerung des Betriebs einer Anlage 1 zur Herstellung wenigstens eines Partikelschaumformteils. Das Verfahren umfasst die Schritte:
- Erfassen und/oder Erzeugen einer den aktuellen und/oder künftigen Verbrauch wenigstens einer Ressource, insbesondere eines Prozessfluids oder eines Energieträgers, in einem aktuellen und/oder künftigen Betrieb wenigstens eines ersten Formteilautomaten 2 - 4 und/oder wenigstens einen Funktionsmoduls 5 der Anlage 1 beschreibenden Ressourceninformation,
- Steuern des Betriebs wenigstens eines Formteilautomaten 2 - 4 und/oder wenigstens eines Funktionsmoduls 5 der Anlage 1 auf Grundlage der erfassten Ressourceninformation.

Mit den Anlagen 1 gemäß den in den Fig. gezeigten Ausführungsbeispielen lässt sich zudem ein Verfahren zur Herstellung wenigstens eines Partikelschaumformteils aus einem expandierbaren oder expandierten Partikelschaummaterial implementieren.

## Patentansprüche

1. Anlage (1) zur Herstellung wenigstens eines Partikelschaumformteils aus einem expandierbaren oder expandiertem Partikelschaummaterial, umfassend:
- einen ersten Formteilautomaten (2 - 4) zur Durchführung wenigstens eines Arbeitsprozesses zur Herstellung wenigstens eines Partikelschaumformteils aus einem expandierbaren oder expandiertem Partikelschaummaterial, wobei der erste Formteilautomat (2 - 4) wenigstens eine Formwerkzeugeinrichtung (2.1 - 2.4) zur Verarbeitung von expandierbarem oder expandiertem Partikelschaummaterial zur Herstellung eines Partikelschaumformteils umfasst;
- wenigstens einen weiteren Formteilautomaten (2 - 4) zur Durchführung wenigstens eines Arbeitsprozesses zur Herstellung wenigstens eines Partikelschaumformteils aus einem expandierbaren oder expandiertem Partikelschaummaterial, wobei der wenigstens eine weitere Formteilautomat wenigstens eine Formwerkzeugeinrichtung (2.1 - 2.4) zur Verarbeitung von expandierbarem oder expandiertem Partikelschaummaterial zur Herstellung eines Partikelschaumformteils umfasst, und/oder
- wenigstens ein dem ersten Formteilautomaten (2 - 4) und/oder dem wenigstens einen weiteren Formteilautomaten (2 - 4) zuordenbares Funktionsmodul (5) zur Durchführung wenigstens eines Arbeitsprozesses zur Herstellung wenigstens eines Partikelschaumformteils aus einem expandierbaren oder expandiertem Partikelschaummaterial;
- eine Erfassungseinrichtung (6), welche zur Erfassung einer den aktuellen und/oder künftigen Verbrauch wenigstens einer Ressource, nämlich eines Prozessfluids, wie insbesondere Dampf und/oder Druckluft und/oder Wasser, oder eines Energieträgers, insbesondere eines elektrischen Energieträgers, in einem aktuellen und/oder künftigen Betrieb des ersten Formteilautomaten (2 - 4) und/oder des wenigstens einen weiteren Formteilautomaten (2 - 4) und/oder des wenigstens einen Funktionsmoduls (5) beschreibenden Ressourceninformation eingerichtet ist,
- eine Steuerungseinrichtung (7), welche zur Steuerung des Betriebs des ersten Formteilautomaten (2 - 4) und/oder des wenigstens einen weiteren Formteilautomaten (2 - 4) und/oder des wenigstens einen Funktionsmoduls (5) auf Grundlage einer Ressourceninformation eingerichtet ist,
**dadurch gekennzeichnet, dass** die Steuerungseinrichtung (7) eingerichtet ist, wenigstens einen Anfangszeitpunkt und/oder einen Endzeitpunkt des Betriebs des ersten Formteilautomaten (2 - 4) und/oder des wenigstens einen weiteren Formteilautomaten und/oder des wenigstens einen Funktionsmoduls (2 - 4) zu steuern, wobei die Steuerungseinrichtung (7) eingerichtet ist, eine koordinierte Festlegung von Anfangszeitpunkten und/oder Endzeitpunkten des Betriebs des wenigstens einen ersten Formteilautomaten (2 - 4) und/oder des wenigstens einen weiteren Formteilautomaten (2 - 4) und/oder des wenigstens einen Funktionsmoduls (2 - 4) vorzunehmen, um Spitzenlastsituationen bestimmter Bestandteile der Anlage (1) oder der gesamten Anlage (1) steuerungstechnisch zu koordinieren.

2. Anlage nach Anspruch 1, **dadurch gekennzeichnet, dass** die Steuerungseinrichtung (7) eingerichtet ist, der Steuerung des Betriebs des ersten Formteilautomaten (2 - 4) und/oder des wenigstens einen weiteren Formteilautomaten (2 - 4) und/oder des wenigstens einen Funktionsmoduls (5) wenigstens ein Zielkriterium zugrunde zu legen.

3. Anlage nach Anspruch 2, **dadurch gekennzeichnet, dass** das Zielkriterium einen bestimmten Energieverbrauch der Anlage (1), insbesondere einen minimalen oder einen maximalen Energieverbrauch definiert, und/oder das oder ein Zielkriterium einen bestimmten Prozessfluidverbrauch der Anlage (1), insbesondere einen minimalen oder einen maximalen Prozessfluidverbrauch definiert, und/oder das oder ein Zielkriterium eine bestimmte Effizienz der Anlage (1), insbesondere eine minimale oder eine maximale Effizienz, definiert; und/oder das oder ein Zielkriterium eine bestimmte Produktivität der Anlage (1), insbesondere eine minimale oder eine maximale Produktivität, definiert.

4. Anlage nach einem der vorhergehenden Ansprüche, **dadurch gekennzeichnet, dass** die Steuerungseinrichtung (7) eingerichtet ist, wenigstens einen Betriebsparameter, insbesondere eine Leistungsaufnahme, des wenigstens einen ersten Formteilautomaten (2 - 4) und/oder des wenigstens einen weiteren Formteilautomaten (2 - 4) und/oder des wenigstens einen Funktionsmoduls (5) auf Grundlage der Ressourceninformation zu definieren.

5. Anlage nach einem der vorhergehenden Ansprüche, **gekennzeichnet durch** eine Datenübertragungseinrichtung (8), welche zur Übertragung einer oder mehrerer Ressourceninformationen an die Steuerungseinrichtung (7) eingerichtet ist.

6. Anlage nach einem der vorhergehenden Ansprüche, **dadurch gekennzeichnet, dass** die Steuerungseinrichtung (7) eingerichtet ist, auf Grundlage einer Ressourceninformation Ressourcen innerhalb der Anlage (1), insbesondere unter entsprechenden Formteilautomaten (2 - 4) und/oder Funktionsmodulen der Anlage (1), zu verteilen.

7. Anlage nach Anspruch 6, **dadurch gekennzeichnet, dass** die Steuerungseinrichtung (7) eingerichtet ist, der Verteilung der Ressourcen wenigstens ein Zielkriterium zugrunde zu legen, wobei das Zielkriterium insbesondere eine gleichmäßige oder ungleichmäßige Verteilung von Ressourcen innerhalb der Anlage definiert.

8. Anlage nach einem der vorhergehenden Ansprüche, **dadurch gekennzeichnet, dass** die Steuerungseinrichtung (7) eingerichtet ist, eine Ressourceninformation mit einer Referenzressourceninformation zu vergleichen und eine ein entsprechendes Vergleichsergebnis beschreibende Vergleichsinformation zu erzeugen.

9. Anlage nach Anspruch 8, **dadurch gekennzeichnet, dass** die Steuerungseinrichtung (7) eingerichtet ist, wenigstens eine Maßnahme zur Kompensation eines, insbesondere außerhalb eines vordefinierbaren oder vordefinierten Grenzwerts, liegenden Abweichung zwischen der erfassten Ressourceninformation und einer Referenzressourceninformation zu steuern.

10. Anlage nach einem der vorhergehenden Ansprüche, **dadurch gekennzeichnet, dass** das wenigstens eine Funktionsmodul (5) eine Bereitstellungseinrichtung zur Bereitstellung wenigstens eines Prozessfluids ist.

11. Anlage nach einem der vorhergehenden Ansprüche, **dadurch gekennzeichnet, dass** das wenigstens eine Funktionsmodul (5) als eine Bereitstellungseinrichtung zur Bereitstellung eines über den wenigstens einen Formteilautomaten (2 - 4) verarbeitbaren oder zu verarbeitbaren expandierbaren oder expandierten Partikelschaummaterials ausgebildet ist oder eine solche umfasst.

12. Anlage nach einem der vorhergehenden Ansprüche, **dadurch gekennzeichnet, dass** das wenigstens eine Funktionsmodul (5) als eine Aufbereitungseinrichtung zur Aufbereitung eines Versorgungsmediums des wenigstens einen Formteilautomaten (2) und/oder wenigstens eines anderen Funktionsmoduls (5) ausgebildet ist oder eine solche umfasst.

13. Verfahren zur Steuerung des Betriebs einer Anlage (1) zur Herstellung wenigstens eines Partikelschaumformteils, **gekennzeichnet durch** die Schritte:
- Erfassen einer den aktuellen und/oder künftigen Verbrauch wenigstens einer Ressource, nämlich eines Prozessfluids oder eines Energieträgers, in einem aktuellen und/oder künftigen Betrieb eines ersten Formteilautomaten (2 - 4) und/oder wenigstens eines weiteren Formteilautomaten (2 - 4) und/oder wenigstens einen Funktionsmoduls (5) der Anlage (1) beschreibenden Ressourceninformation,
- Steuern, vermittels einer Steuerungseinrichtung (7), des Betriebs des ersten Formteilautomaten (2 - 4) und/oder des wenigstens einen weiteren Formteilautomaten (2 - 4) und/oder des wenigstens einen Funktionsmoduls (5) der Anlage (1) auf Grundlage der erfassten Ressourceninformation, wobei die Steuerungseinrichtung (7) eingerichtet ist, wenigstens einen Anfangszeitpunkt und/oder einen Endzeitpunkt des Betriebs des ersten Formteilautomaten (2 - 4) und/oder des wenigstens einen weiteren Formteilautomaten und/oder des wenigstens einen Funktionsmoduls (2 - 4) zu steuern,
**dadurch gekennzeichnet, dass** die Steuerungseinrichtung (7) eine koordinierte Festlegung von Anfangszeitpunkten und/oder Endzeitpunkten des Betriebs des wenigstens einen ersten Formteilautomaten (2 - 4) und/oder des wenigstens einen weiteren Formteilautomaten (2 - 4) und/oder des wenigstens einen Funktionsmoduls (2 - 4) vornimmt, um Spitzenlastsituationen bestimmter Bestandteile der Anlage (1) oder der gesamten Anlage (1) steuerungstechnisch zu koordinieren.

14. Verfahren zur Herstellung wenigstens eines Partikelschaumformteils aus einem expandierbaren oder expandiertem Partikelschaummaterial, **dadurch gekennzeichnet, dass** das zur Durchführung des Verfahrens eine Anlage (1) nach einem der Ansprüche 1 bis 12 verwendet wird.

## Claims

1. Plant (1) for producing at least one particle foam moulded part from an expandable or expanded particle foam material, comprising:
- a first shape moulding machine (2 - 4) for carrying out at least one work process for producing at least one particle foam moulded part from an expandable or expanded particle foam material, wherein the first shape moulding machine (2 - 4) comprises at least one mould tooling device (2.1 - 2.4) for processing expandable or expanded particle foam material to produce a particle foam moulded part;
- at least one further shape moulding machine (2 - 4) for carrying out at least one work process for producing at least one particle foam moulded part from an expandable or expanded particle foam material, wherein the at least one further shape moulding machine comprises at least one mould tooling device (2.1 - 2.4) for processing expandable or expanded particle foam material to produce a particle foam moulded part, and/or
- at least one functional module (5) assignable to the first shape moulding machine (2 - 4) and/or the at least one further shape moulding machine (2 - 4) for carrying out at least one work process for producing at least one particle foam moulded part from an expandable or expanded particle foam material;
- an acquisition device (6) configured to acquire resource information describing the current and/or future consumption of at least one resource, namely a process fluid, such as, in particular, steam and/or compressed air and/or water, or an energy carrier, in particular an electrical energy carrier, in a current and/or future operation of the first shape moulding machine (2 - 4) and/or the at least one further shape moulding machine (2 - 4) and/or the at least one functional module (5),
- a control device (7) configured to control the operation of the first shape moulding machine (2 - 4) and/or the at least one further shape moulding machine (2 - 4) and/or the at least one functional module (5) on the basis of resource information, **characterized in that**
the control device (7) is configured to control at least one start time and/or one end time of the operation of the first shape moulding machine (2 - 4) and/or the at least one further shape moulding machine and/or the at least one functional module (2 - 4), wherein the control device (7) is configured to perform a coordinated determination of start times and/or end times of the operation of the at least one first shape moulding machine (2 - 4) and/or the at least one further shape moulding machine (2 - 4) and/or the at least one functional module (2 - 4), in order to coordinate peak-load situations of particular components of the plant (1) or of the entire plant (1) by means of control.

2. Plant according to claim 1, **characterized in that** the control device (7) is configured to base the control of the operation of the first shape moulding machine (2 - 4) and/or the at least one further shape moulding machine (2 - 4) and/or the at least one functional module (5) on at least one target criterion.

3. Plant according to claim 2, **characterized in that** the target criterion defines a particular energy consumption of the plant (1), in particular a minimum or a maximum energy consumption, and/or the or a target criterion defines a particular process fluid consumption of the plant (1), in particular a minimum or a maximum process fluid consumption, and/or the or a target criterion defines a particular efficiency
of the plant (1), in particular a minimum or a maximum efficiency; and/or the or a target criterion defines a particular productivity of the plant (1), in particular a minimum or a maximum productivity.

4. Plant according to any one of the preceding claims, **characterized in that** the control device (7) is configured to define at least one operating parameter, in particular a power input, of the at least one first shape moulding machine (2 - 4) and/or the at least one further shape moulding machine (2 - 4) and/or the at least one functional module (5) on the basis of the resource information.

5. Plant according to any one of the preceding claims, **characterized by** a data transmission device (8) configured to transmit one or more items of resource information to the control device (7).

6. Plant according to any one of the preceding claims, **characterized in that** the control device (7) is configured to distribute resources within the plant (1), in particular among corresponding shape moulding machines (2 - 4) and/or functional modules of the plant (1), on the basis of resource information.

7. Plant according to claim 6, **characterized in that** the control device (7) is configured to base the distribution of the resources on at least one target criterion, wherein the target criterion defines, in particular, a uniform or non-uniform distribution of resources within the plant.

8. Plant according to any one of the preceding claims, **characterized in that** the control device (7) is configured to compare resource information with reference resource information and to generate comparison information describing a corresponding comparison result.

9. Plant according to claim 8, **characterized in that** the control device (7) is configured to control at least one measure for compensating for a deviation between the acquired resource information and reference resource information, the deviation being, in particular, outside a limit value that can be predefined or is predefined.

10. Plant according to any one of the preceding claims, **characterized in that** the at least one functional module (5) is a supply device for supplying at least one process fluid.

11. Plant according to any one of the preceding claims, **characterized in that** the at least one functional module (5) is configured as, or comprises, a supply device for supplying an expandable or expanded particle foam material that can be processed or is to be processed by the at least one shape moulding machine (2 - 4).

12. Plant according to any one of the preceding claims, **characterized in that** the at least one functional module (5) is configured as, or comprises, a treatment device for treating a supply medium of the at least one shape moulding machine (2) and/or at least one other functional module (5).

13. Method for controlling the operation of a plant (1) for producing at least one particle foam moulded part, **characterized by** the steps of:
- acquiring resource information describing the current and/or future consumption of at least one resource, namely a process fluid or an energy carrier, in a current and/or future operation of a first shape moulding machine (2 - 4) and/or at least one further shape moulding machine (2 - 4) and/or at least one functional module (5) of the plant (1),
- controlling, by means of a control device (7), the operation of the first shape moulding machine (2 - 4) and/or the at least one further shape moulding machine (2 - 4) and/or the at least one functional module (5) of the plant (1) on the basis of the acquired resource information, wherein the control device (7) is configured to control at least one start time and/or one end time of the operation of the first shape moulding machine (2 - 4) and/or the at least one further shape moulding machine and/or the at least one functional module (2 - 4),
**characterized in that** the control device (7) performs a coordinated determination of start times and/or end times of the operation of the at least one first shape moulding machine (2 - 4) and/or the at least one further shape moulding machine (2 - 4) and/or the at least one functional module (2 - 4), in order to coordinate peak-load situations of particular components of the plant (1) or of the entire plant (1) by means of control.

14. Method for producing at least one particle foam moulded part from an expandable or expanded particle foam material, **characterized in that** a plant (1) according to any one of claims 1 to 12 is used to carry out the method.

## Revendications

1. Installation (1) de fabrication d'au moins une pièce moulée en mousse particulaire à partir d'un matériau de mousse particulaire expansible ou expansé, comprenant :
- une première machine de moulage de pièces (2 - 4) pour mettre en œuvre au moins un processus de travail pour fabriquer au moins une pièce moulée en mousse particulaire à partir d'un matériau de mousse particulaire expansible ou expansé, dans laquelle la première machine de moulage de pièces (2 - 4) comprend au moins un dispositif d'outillage de moulage (2.1 - 2.4) pour transformer un matériau de mousse particulaire expansible ou expansé afin de fabriquer une pièce moulée en mousse particulaire ;
- au moins une autre machine de moulage de pièces (2 - 4) pour mettre en œuvre au moins un processus de travail pour fabriquer au moins une pièce moulée en mousse particulaire à partir d'un matériau de mousse particulaire expansible ou expansé, dans laquelle ladite au moins une autre machine de moulage de pièces comprend au moins un dispositif d'outillage de moulage (2.1 - 2.4) pour transformer un matériau de mousse particulaire expansible ou expansé afin de fabriquer une pièce moulée en mousse particulaire, et/ou
- au moins un module fonctionnel (5) pouvant être attribué à la première machine de moulage de pièces (2 - 4) et/ou à ladite au moins une autre machine de moulage de pièces (2 - 4) pour mettre en œuvre au moins un processus de travail pour fabriquer au moins une pièce moulée en mousse particulaire à partir d'un matériau de mousse particulaire expansible ou expansé ;
- un dispositif d'acquisition (6) configuré pour acquérir une information de ressources décrivant la consommation actuelle et/ou future d'au moins une ressource, à savoir un fluide de procédé, tel que, en particulier, de la vapeur et/ou de l'air comprimé et/ou de l'eau, ou un vecteur énergétique, en particulier un vecteur énergétique électrique, dans un fonctionnement actuel et/ou futur de la première machine de moulage de pièces (2 - 4) et/ou de ladite au moins une autre machine de moulage de pièces (2 - 4) et/ou dudit au moins un module fonctionnel (5),
- un dispositif de commande (7) configuré pour commander le fonctionnement de la première machine de moulage de pièces (2 - 4) et/ou de ladite au moins une autre machine de moulage de pièces (2 - 4) et/ou dudit au moins un module fonctionnel (5) sur la base d'une information de ressources, **caractérisée en ce que**
le dispositif de commande (7) est configuré pour commander au moins un instant de début et/ou un instant de fin du fonctionnement de la première machine de moulage de pièces (2 - 4) et/ou de ladite au moins une autre machine de moulage de pièces et/ou dudit au moins un module fonctionnel (2 - 4), dans laquelle le dispositif de commande (7) est configuré pour procéder à une détermination coordonnée d'instants de début et/ou d'instants de fin du fonctionnement de ladite au moins une première machine de moulage de pièces (2 - 4) et/ou de ladite au moins une autre machine de moulage de pièces (2 - 4) et/ou dudit au moins un module fonctionnel (2 - 4), afin de coordonner, au moyen de la commande, des situations de charge de pointe de certains constituants de l'installation (1) ou de l'ensemble de l'installation (1).

2. Installation selon la revendication 1, **caractérisée en ce que** le dispositif de commande (7) est configuré pour fonder la commande du fonctionnement de la première machine de moulage de pièces (2 - 4) et/ou de ladite au moins une autre machine de moulage de pièces (2 - 4) et/ou dudit au moins un module fonctionnel (5) sur au moins un critère cible.

3. Installation selon la revendication 2, **caractérisée en ce que** le critère cible définit une consommation d'énergie déterminée de l'installation (1), en particulier une consommation d'énergie minimale ou maximale, et/ou le critère cible ou un critère cible définit une consommation de fluide de procédé déterminée de l'installation (1), en particulier une consommation de fluide de procédé minimale ou maximale, et/ou le critère cible ou un critère cible définit une efficacité déterminée
de l'installation (1), en particulier une efficacité minimale ou maximale ; et/ou le critère cible ou un critère cible définit une productivité déterminée de l'installation (1), en particulier une productivité minimale ou maximale.

4. Installation selon l'une quelconque des revendications précédentes, **caractérisée en ce que** le dispositif de commande (7) est configuré pour définir au moins un paramètre de fonctionnement, en particulier une puissance absorbée, de ladite au moins une première machine de moulage de pièces (2 - 4) et/ou de ladite au moins une autre machine de moulage de pièces (2 - 4) et/ou dudit au moins un module fonctionnel (5) sur la base de l'information de ressources.

5. Installation selon l'une quelconque des revendications précédentes, **caractérisée par** un dispositif de transmission de données (8) configuré pour transmettre une ou plusieurs informations de ressources au dispositif de commande (7).

6. Installation selon l'une quelconque des revendications précédentes, **caractérisée en ce que** le dispositif de commande (7) est configuré pour distribuer des ressources au sein de l'installation (1), en particulier entre des machines de moulage de pièces (2 - 4) et/ou des modules fonctionnels correspondants de l'installation (1), sur la base d'une information de ressources.

7. Installation selon la revendication 6, **caractérisée en ce que** le dispositif de commande (7) est configuré pour fonder la distribution des ressources sur au moins un critère cible, dans laquelle le critère cible définit en particulier une distribution uniforme ou non uniforme de ressources au sein de l'installation.

8. Installation selon l'une quelconque des revendications précédentes, **caractérisée en ce que** le dispositif de commande (7) est configuré pour comparer une information de ressources à une information de ressources de référence et pour générer une information de comparaison décrivant un résultat de comparaison correspondant.

9. Installation selon la revendication 8, **caractérisée en ce que** le dispositif de commande (7) est configuré pour commander au moins une mesure de compensation d'un écart entre l'information de ressources acquise et une information de ressources de référence, l'écart se situant en particulier en dehors d'une valeur limite pouvant être prédéfinie ou prédéfinie.

10. Installation selon l'une quelconque des revendications précédentes, **caractérisée en ce que** ledit au moins un module fonctionnel (5) est un dispositif de fourniture pour fournir au moins un fluide de procédé.

11. Installation selon l'une quelconque des revendications précédentes, **caractérisée en ce que** ledit au moins un module fonctionnel (5) est réalisé sous la forme d'un dispositif de fourniture pour fournir un matériau de mousse particulaire expansible ou expansé pouvant être transformé ou devant être transformé par ladite au moins une machine de moulage de pièces (2 - 4), ou comprend un tel dispositif.

12. Installation selon l'une quelconque des revendications précédentes, **caractérisée en ce que** ledit au moins un module fonctionnel (5) est réalisé sous la forme d'un dispositif de traitement pour traiter un milieu d'alimentation de ladite au moins une machine de moulage de pièces (2) et/ou d'au moins un autre module fonctionnel (5), ou comprend un tel dispositif.

13. Procédé de commande du fonctionnement d'une installation (1) de fabrication d'au moins une pièce moulée en mousse particulaire, **caractérisé par** les étapes suivantes :
- acquisition d'une information de ressources décrivant la consommation actuelle et/ou future d'au moins une ressource, à savoir un fluide de procédé ou un vecteur énergétique, dans un fonctionnement actuel et/ou futur d'une première machine de moulage de pièces (2 - 4) et/ou d'au moins une autre machine de moulage de pièces (2 - 4) et/ou d'au moins un module fonctionnel (5) de l'installation (1),
- commande, au moyen d'un dispositif de commande (7), du fonctionnement de la première machine de moulage de pièces (2 - 4) et/ou de ladite au moins une autre machine de moulage de pièces (2 - 4) et/ou dudit au moins un module fonctionnel (5) de l'installation (1) sur la base de l'information de ressources acquise, dans lequel le dispositif de commande (7) est configuré pour commander au moins un instant de début et/ou un instant de fin du fonctionnement de la première machine de moulage de pièces (2 - 4) et/ou de ladite au moins une autre machine de moulage de pièces et/ou dudit au moins un module fonctionnel (2 - 4),
**caractérisé en ce que** le dispositif de commande (7) procède à une détermination coordonnée d'instants de début et/ou d'instants de fin du fonctionnement de ladite au moins une première machine de moulage de pièces (2 - 4) et/ou de ladite au moins une autre machine de moulage de pièces (2 - 4) et/ou dudit au moins un module fonctionnel (2 - 4), afin de coordonner, au moyen de la commande, des situations de charge de pointe de certains constituants de l'installation (1) ou de l'ensemble de l'installation (1).

14. Procédé de fabrication d'au moins une pièce moulée en mousse particulaire à partir d'un matériau de mousse particulaire expansible ou expansé, **caractérisé en ce qu'**une installation (1) selon l'une quelconque des revendications 1 à 12 est utilisée pour mettre en œuvre le procédé.
